# EUROPEAN PATENT APPLICATION

(11) **EP 4 155 840 A1**
(43) Date of publication of application: **29.03.2023**
(21) Application number: 21198164.2
(22) Date of filing: 22.09.2021
(51) Int. Cl.: G05B 13/02, G05B 15/02, G05B 13/04

(54) **SET OF COMPUTER READABLE DATA WITH RELATION TO OPERATING STATES OF A DEVICE AND RELATED ITEMS**

(71) Applicant: John, Jean Pascal, 81673 München (DE)
(72) Inventor: John, Jean Pascal, 81673 München (DE)

(57) **Abstract**

Described is a set of computer readable data (400, 500) with relation to operating states of a device (200, 300), comprising:
- request data (400) which forms a request to a data processing device (100), wherein the request data comprises data elements (DE1 to DE18) comprising raw data or pre-processed data representing operating states of the device (200, 300) in a chronological sequence, wherein the data elements comprise at least one physical parameter of the device (200, 300) or of a physical medium produced by the device (200, 300) and by at least one further parameter,
wherein the at least one physical parameter and the at least one further parameter relate to other aspects than physical time or duration between two events, and
- answer data (500) which form the answer of the data processing device (100) to a request of a user based on the request data (400),
wherein the answer data comprises operating point data of operating points (OP_1 to OP_13) of the device (200, 300),
wherein the operating points (OP_1 to OP_13) are defined by a respective value of the at least one physical parameter of the device (200, 300) or of physical medium (e.g. product) produced by the device (200, 300) and by a respective value of the at least one further parameter,
and wherein the answer data defines a composed series of operating points (OP_1, OP_2, OP_4) comprising:
- a first portion of the composed series of operating points (OP_1, OP_2) that is based on data elements (DE1 to DE11) of a first portion of the chronological series, and
- a second portion of the composed series of operating points (OP_2, OP_4) that is based on data elements (DE1 to DE11) of a second portion of the chronological sequence, and
wherein the composed series of operating points (OP_1, OP_2) is a recombination of portions of the chronological sequence of operating states.

## Description

### Technical field

The invention relates to a set of computer readable data with relation to operating states of a device, corresponding computer readable data, a computer-implemented method for determining operating points of a device automatically a method of displaying a sequence of preferred operating points and a data processing device.

### Background

Devices, as for instance machines or apparatuses producing a medium or a product, may be optimized according to a plurality of ways, e.g. using manual adjustment, using classical optimization methods or nowadays using artificial intelligence. There are a lot of drawback of the known methods, e.g. costs, calculation power, man power needed to configure an optimization method, e.g. to find enough example and to train a neural network, etc.

### Summary

It is an object of the invention to provide a set a of computer readable data, especially comprising request data to a server unit and answer data of the server unit or of another server unit. Furthermore, related item shall be provided. Especially, the data shall be provided in a cost-efficient way, e.g. with regard to man power for implementing and adapting the methods to specific application cases and/or with regard to calculation power of computers needed to perform the method.

This object is solved by the subject matter of the independent claims. Embodiments are provided in the dependent claims.

A set of computer readable data with relation to operating states of a device may comprise:
- a) Request data which may form a request to a data processing device. The request data may comprise data elements comprising raw data or pre-processed data representing operating states of the device in a chronological sequence. The data elements may comprise at least one physical parameter of the device or of a physical medium produced by the device and by at least one further parameter. The at least one physical parameter and the at least one further parameter may relate to other aspects than physical time and/or duration between two events.
- b) Answer data which may form the answer of the data processing device to a request of a user based on the request data. The answer data may comprise operating point data of operating points of the device. The operating points may be defined by a respective value of the at least one physical parameter of the device or of physical medium, e.g. a product, produced by the device and by a respective value of the at least one further parameter.

The answer data may define a composed series of operating points comprising:
- A first portion of the composed series of operating points that is based on data elements of a first portion of the chronological series, and
- A second portion of the composed series of operating points that is based on data elements of a second portion of the chronological sequence, and
wherein the composed series of operating points is a recombination of portions of the chronological sequence of operating states.

An operating point may be based on an operation state, e.g. using a calculation as described below.

Operating points may be associated to one or more operating states, e.g. by pre-processing. Thus, a chronological sequence of operating states may be mapped to a chronological series of operating points. Thereafter, recombination may be performed.

For example, when a common operating point occurs at least twice within the chronological series it is possible to split the large series of operating points into at least three portions. The first portion may end with an occurrence of the common operating point, the middle portion may start and end with an occurrence of the same common operating point and the last portion may start with an occurrence of the common operating point. A composed series may then consist of only the first portion and the last portion, i.e. the middle portion may be omitted. The composed series comprises the recombination. The portions may also be regarded as time frames.

Other examples for recombination (reordering, making new combinations) are, e.g.:
- With four portion, the two middle portion may be reordered (interchanged),
- More than one portion may be omitted,
- Portions may be copied, and/or to
- Portions may be reordered.

The composed series of operating points within the answer data may be a series of operating points that previously has not occurred in that consecutive order in any of the previous sequences of operating states within the request data. In other words, a sequence of operating state corresponding to the composed series of operating points has not occurred within the raw data.

The request data may comprise time data. However, the time aspect of the operation of the device may be represented at least partially or completely by the sequence of the date elements within the request data, i.e. by the order specified by the data elements.

The words "is based on data elements" may mean that the respective portion of the composed series of operating points is calculated using the data elements, e.g. using a data processing device.

The physical medium may be a physical entity, e.g. air or water or a product, e.g. a food product, a pharmaceutical product or a chemical product. The device may be a machine, e.g. a transport machine and/or a machine comprising rotating parts, or an apparatus. The apparatus may not be moved during its usage. The apparatus may comprise rotating parts or not.

Raw data may be unprocessed data as delivered by a sensor. Sensors with internal data processing or signal processing may be used. Analog sensor signals may be converted to digital sensor signals using e.g. an analog to digital converter unit (ADC) or other technical means. ADC output data may be used as raw data.

Pre-processed data may be data pre-processed by at least one of the following methods:
- Rounding of real numbers, e.g. rounding of 1.2 or 1.3 to the value 1, e.g. by truncating the part after the comma or by using other rounding rules,
- Rounding of integer numbers to pre-given points according to a rounding rule, e.g. rounding 1020 or 1015 to the value of 1000.
- Filtering using e.g. moving (sliding) average over values, e.g. of the physical parameter,
- Filtering using other criterion, e.g. using only values that occurred longer than a pre-given period, e.g. longer than one second. The period may be determined based on the dynamic of the machine and/or on the dynamic of a sensor used to detect or to measure machine data or other data, e.g. the physical value.

The answer data may comprise preferably an identifier that relates the answer data to the request data, e.g. that identifies the answer data. Date and time of the request and/or a customer ID (Identification), etc. may be used as an identifier.

The answer data may be stored within a database, transmitted via internet.

Thus, sequences of operating points and/or corresponding transitions may be overlaid in order to generate the answer data. The overlay may form the basis for an optimization. The answer data may comprise the overlaid data allowing a user to perform the optimization on his/her side and/or to understand the optimization better and/or only one (1) already optimized sequence of operating points may be providing within the answer data for an optimized operation of the device.

According to an embodiment, the answer data may comprise transition data of transitions between the operating points. The time aspect of the operation of the device may be represented at least partially or completely by the transitions. The composed series of operating points may comprise at least one common operating point. A first transition may end on the common operating. A second transition may start on the common operating point. Thus, two transitions may be connected directly within the resulting series (composed series) of operating points which are not connected directly according to a previous run or to previous runs or simulation run(s) of the device for generating the request data. Thus, again, the user may receive optimized answer data that comprise only one optimized resulting route or resulting series of operating points or the user may receive answer data comprising several routes or several series that are overlaid to each other and that comprise the "mixed" route or the resulting sequence of operating points implicitly.

According to an embodiment, the transitions may indicate that at least two of the transitions start at the same operating point. Alternatively or additionally, the transitions may indicate that at least two of the transitions end at the same operating point. Thus, the user may receive answer data comprising several routes or series that are overlaid to each other and that comprise the "mixed" route or the resulting series of operating points implicitly. This may allow an optimization on the side of the used, e.g. using his own optimization methods. Manual optimization may be possible for trained person based on several routes or sequences visible from the answer data if displayed within a graph.

According to an embodiment, the answer data may comprise at least two sets of operating point data or at least three sets of operating point data comprising preferably values of at least one physical parameter and/or of the at least one further parameter. Each set of operating point data may represent a unique operating point of the device. Each set of operating point data may comprise at least one identifier for a transition between two successive operating points, preferably for at least one of an outgoing transition from the operating point specified by the respective operating point data and/or an ingoing transition to the operating point specified by the respective operating point data. Thus, efficient encoding of transitions related to respective operating points is feasible.

According to an embodiment, the answer data may comprise within each set of operating point data occurrence data indicating the number of occurrences of the respective operating point to which the set belongs within at least one operating series of operating points of the device. Occurrence data may be used for optimization or for further optimization on the side of the user. Alternatively, verification of an optimized route may be possible by the user using occurrence data of the operating points.

According to an embodiment, the answer data may comprise at least two sets of transition data. Each set of transition data may indicate a transition from one operating point to a subsequent operating point of the device. Preferably, each transition data may comprise a first data element indicating an operating point on which the transition starts and a second data element indication an operating point on which the transition ends. Such transition data may be transmitted to the user in order to allow further optimization and/or verification on the side of the user. Alternatively, such transition data may be used only on the server unit that answers the request of the user.

According to a further embodiment, the computer readable data may comprise within each set of transition data occurrence data indicating the number of occurrences of the respective transition to which the set belongs within at least one operating sequence of operating points of the device. Alternatively and/or additionally, within each set of transition data time data may be comprised indicating the time or an average time of the respective transition to which the set belongs within the least one operating sequence of operating points of the device. Such transition data may be transmitted to the user in order to allow further optimization and/or verification on the side of the user. Alternatively, such transition data may be used only on the server unit that answers the request of the user.

According to an embodiment, the at least one physical parameter may be a physical parameter of the device. The at least one physical parameter may be one of the following physical quantities: velocity, rotational speed, temperature, length, pressure, flow, concentration, position or angular position of a component, mass, weight, density, viscosity, color, humidity, pH value, level, fineness, granularity, heights/widths, volume, saturation, solubility, physical energy (joules), physical work or physical power (watts), current, voltage, force, electric or magnetic field strengths, resistance, capacities, vibration, wavelength, tension or any derivation of any of these quantities. Thus, there is a wide application area for the invention.

Time parameters may be included or may not be included. Time parameters may not be critical because the time aspect may be considered implicitly by the order of operating points within the sequences of operating points. However, derivation in time, e.g. rate in change over time, for instance first derivation in time, second derivation in time, etc. for all other parameters specified may be used in order to improve the modelling of the device based on sequences of operating points.

For instance, more than 50 percent or more than 90 percent of all element data may comprise complete data, e.g. comprising values for all parameters considered. However, good results may also be achieved for "sparse" data, e.g. less than 50 percent of all element data comprise values for all parameters considered within the model of the device.

According to a further embodiment, the physical parameter may be a physical parameter of a product that may be produced during the operation of the device. The physical parameter may be one of the following physical quantities: count, temperature, length, humidity, color, flavor ratings, velocity, rotational speed, pressure, flow, concentration, position of a component, angular position (angular degrees) of a component, mass, weight, density, viscosity, color, humidity, pH value, level, fineness, granularity, height, widths, volume, saturation, solubility, physical energy (joules), physical work or physical power (watts), current, voltage, force, electric or magnetic field strengths, resistance, capacities, vibration, wavelength, tension or any derivation of any of these quantities. Thus, there is a wide application area for the invention using device parameters and/or product parameters of a product produced by the device. A physical medium that is changed in its physical characteristic may also be regarded as a product of the device, e.g. the temperature of the air "produced" by an air conditioner, etc.

Furthermore, environmental parameters may be included, especially physical environmental parameters having a direct or an indirect influence to the operation of the device and/or to the characteristic of a product produced or a physical medium changed in its physical characteristics by the device. Examples for environmental parameters may be: temperature, humidity of air, pressure of air, etc.

Further parameters may refer to actuating values or set-values (control) and/or to aims of operating the device, e.g. machine or transport machine, apparatus, producing product.

According to an embodiment, the physical parameter may be a parameter having numerical values and wherein at least one of the further parameter may be a parameter having nominal values, preferably a parameter defined by at least one word of a natural language or by a symbol. Numerical parameters may be parameters which may be tested if one is greater or less to the other. Contrary, this may not be possible for nominal values, e.g. drive mode "power" or "relax" or smell or taste of a product. Only a test may be meaningful whether two nominal parameters are equal or non-equal. Thus, difference types of parameters may be included into the modelling of the device allowing to consider all aspects relevant for the application/operation of the device.

According to a further embodiment the computer readable data, especially the answer data may define a graph. The graph may comprise vertices and edges. The operating points may form the vertices of the graph and the transitions may form the edges of the graph. The graph may be defined within a coordinate system or within a space. The axis of the coordinate system or the dimensions of the space may correspond to the at least one physical parameter and to the at least one further parameter. Edges of the graph may be directed edges. The direction of the edge may be indicated in a visual representation of the graph or may be implicit if for instance a start vertex and end vertex. The vertices may also be referred to as node(s) or point(s). The edges may be named as link or line. The graph may be displayed on an electronic display device and/or used for performing an optimization method. Numerical data may be used to represent the graph. Alternatively image data may be used to represent the graph and to display the graph directly onto a display. According to an embodiment, the answer data may be generated according to a computer-implemented method for determining operating points of a device automatically, comprising:
- generating data elements representative for the operation of the device and comprising a set of values of at least one parameter,
   wherein at least one parameter is a physical parameter of the device, and/or
- using at least one parameter of the data elements or all parameters of the set for a search within a database comprising operating point data of the device,
   wherein each operating point data comprises a set of values of the at least one parameter,
- if no operating point data has been found in the search storing new operating point data in the database using data of the respective data element, or
- if corresponding operating point data has been found in the search using this fact for further processing of the respective data element.

The method may have the effect that the set of values of the at least one parameter within each operating point data may be different from the set of values of the at least one parameter of all other operating point data. The number of operating points defined by operating point data may be less than the number of data elements used for the searches. Thus, optimization may be easier compared to cases comprising too many operating points.

Both sets of values may relate to same parameters and to same number of parameter. However, a set of values of operating point data may comprise further parameters compared to the sets of values of data elements used for the search.

Each step of the method may be performed computer implemented, e.g. using a computer, especially for storing and finding the respective data as well as for processing of the respective data.

According to a second aspect, computer readable data is disclosed representing operating points of a device and transitions between the operating points. The transitions may indicate that at least two of the transitions start at the same operating point. Alternatively or additionally, the transitions may indicate that at least two of the transitions end at the same operating point. The operating points may be defined by at least one physical parameter of the device or of physical medium, e.g. of a product, produced by the device and by at least one further parameter. The at least one physical parameter and the at least one further parameter may relate to other aspects than physical time or duration between two events/operating states of the device. The time aspect of the operation of the device may be represented at least partially or completely by the transitions. Thus, the answer data may represent at least one bifurcation and/or encountering of two transitions at the same operating point. This may allow the usage of known optimization methods on the side of the user, e.g. the person or institution who made the request bases on the request data. Thus, the second aspect may be independent of the usage of request data and/or answering data. However, the computer readable data of the second aspect may be comprised in answer data belonging to request data and to a corresponding request of a user specifying an optimization goal.

The answer data may define at least two different sequences of operating points of the device. The answer data may be stored within a database, transmitted via internet.

The same explanations given above for the first aspect do apply also to the second aspect. Especially, claims 4 to 9 may be made dependent also on claim 10, i.e. the claim according to the second aspect.

According to a further aspect, independent on usage of request data and/or answer data a computer-implemented method for determining operating points of a device automatically is disclosed, comprising:
- generating data elements representative for the operation of the device and comprising a set of values of at least one parameter,
   wherein at least one parameter is a physical parameter of the device, and/or
- using at least one parameter of the data elements for a search within a database comprising operating point data of the device,
   wherein each operating point data comprises a set of values of the at least one parameter, and/or
- if no operating point data has been found in the search storing new operating point data in the database using data of the respective data element, or
- if corresponding operating point data has been found in the search using this fact for further processing of the respective data element.

The method may have the effect that the set of values of the at least one parameter within each operating point data is different from the set of values of the at least one parameter of all other operating point data. The number of operating points defined by operating point data may be is less than the number of data elements used for the searches providing a basis for efficient optimization and/or for efficient storage of data. Operating point data may be stored for each operating point only once within the database.

All steps may be performed using a of computer implementation. Thus, all steps have a further technical component in addition to the content of the data that is related to the operation of a technical device.

The method may be used to generate the answer data mentioned for the first aspect, e.g. based on the request data mentioned for the first aspect and based on a user request comprising an optimization goal. Thus, the same technical effects mentioned above apply also to the method. Vice versa, technical effects mentioned for the method may also apply to the set of computer readable data according to the first aspect or to the computer readable data according to the second aspect.

According to an embodiment, the operating point data found may be updated by increasing an occurrence or frequency counter for the found operating point data if corresponding operating point data has been found in the search. The occurrence data may used for optimization purposes or for other purposes. Especially, device models may be preferred that comprise only operating points that occurred more than a threshold value, e.g. more than two, more than three or more than four times.

According to an embodiment, the same operating point data may be found for at least two queries made for data elements. If operating point data is found for a second time, a third time, etc. the number of operating points is not increased thereby preventing excess use of memory and other resources of a data processing device.

According to an embodiment, the data elements may form a sequence of data elements. The order of data element within the sequence may correspond to the order in which the data elements where generated by the device or by a simulation unit simulating the device. Alternatively or additionally each data element may comprise a timestamp that indicates the position within the sequence and/or a valid time reference, for instance data and time (CEST (Central European Sommer Time), CET (Central European (winter) Time) or a time that may be converted to this time. However, other time references may also be used.

At least two, three, four, etc. transition data elements may be generated describing a time relation between two successive operating points. The transition data elements may be stored within the database or within a transition database.

According to a further embodiment, transition data elements may be generated in-line or step by step together with the corresponding operating points and operating point data. This may be preferred for real time processing (not all data elements are known at start of processing) but may also be used for processing of historical data elements which are complete before starting of the processing. Alternatively, two successive runs of processing of the data elements may be used, e.g. e first run for determining the operating points and a second run for determining the transitions. The alternative may be used preferably for processing of historical data.

According to a further embodiment, the transition data elements may indicate transitions from one of the stored operating points to a subsequent operating point according to the sequence of data elements. Each transition data element may comprise a first data element indicating an operating point on which the transition starts and a second data element indicating an operating point on which the transition ends. Thus, an efficient encoding scheme is provided. However, other appropriate coding schemed may be used as well.

According to a further embodiment, each operating point data may comprise at least one identifier for a transition between two successive operating points, preferably for at least one of an outgoing transition from the operating point specified by the respective operating point data and an ingoing transition to the operating point specified by the respective operating point data. This detailed coding scheme may be simple and efficient, e.g. with regard to usage of memory space as well as with regard to processing time for generating the identifiers of the transitions.

According to a further embodiment, the method may comprise:
- generating transition data based on two subsequent operating points resulting from processing of the data element, and/or
- using the transition data for a search within the transition database, and/or
- depending on the result of the search storing new transition data in the transition database using data of the respective transition data element if the search indicates that no transition corresponding to the respective transition data is stored within the transition database, or
- if corresponding transition data has been found using this fact for further processing of the respective transition data.

Thus, also a reduced amount of transition data may be used providing a basis for the application of simple optimization methods.

According to a further embodiment, the same transition data may be found for at least two queries made for transition data. Alternatively or additionally, transition data may be stored only once for each transition within the transition data base. Alternatively or additionally, for at least one transition represented by transition data it may be recorded that the transition occurred at least twice during processing of the data elements. The occurrence value indicating the occurrence of a transition may be used for advanced optimization methods. Thus, it may be preferred to find more "conservative" results in some optimization methods by using only transitions that occurred more than a value indicated by a threshold value, e.g. more than twice, more than three times, etc. Contrary, in more "experimental" scenarios also transitions having a low occurrence value may be used.

According to an embodiment, the transition data may indicate that at least two of the transitions start at the same operating point. Alternatively or additionally, the transition data indicate that at least two of the transitions end at the same operating point. There may be at least two ways/routes/sequences of operating points in the forward direction of a sequence of operating points of the device. Alternatively or additionally, there may be at least two ways ways/routes/ sequences of operating points in backward direction of a sequence of operating points of the device. These bifurcations or encounter of two transition may represent the overlay of routes or of sequences of operating points mentioned above. This overlay may provide the basis for the application of simple and/or known optimization methods to machines for which no optimization has been possible before and/or for which only expensive optimization was possible before.

According to a further embodiment of the method, the physical parameter may be a first physical parameter. Alternatively or additionally, the sets of values of the parameters of the element data may comprise values of a second physical parameter of the device that is different from the first physical parameter. Alternatively or additionally the first physical parameter or the second physical parameter may be one of the following physical quantities: time, velocity, rotational speed, temperature, length, pressure, flow, concentration, position of a component or angular position of a component, mass, weight, density, viscosity, color, humidity, pH, level, fineness, granularity, heights/widths, volume, saturation, solubility, physical energy (joules), physical work or physical power (watts), current, voltage, force, electric or magnetic field strengths, resistance, capacities, vibration, wavelength, tension or any derivation of any of these quantities. The technical effects mentioned above for these device parameters may also apply to the method.

According to a further embodiment, the element data may comprise values of at least one a physical parameter of a product that is produced during the operation of the device or of a physical medium that is changed in its characteristics by the operation of the device, preferably values of at least of the following physical quantities: time, count, temperature, length, humidity, color, flavor ratings, velocity, rotational speed, pressure, flow, concentration, position of a component, or angular position of a component, mass, weight, density, viscosity, color, humidity, pH value (power or potential of hydrogen), level, fineness, granularity, height, widths, volume, saturation, solubility, physical energy (joules), physical work or physical power (watts), current, voltage, force, electric or magnetic field strengths, resistance, capacities, vibration, wavelength, tension or any derivation of any of these quantities. The technical effects mentioned above for these product/physical medium parameters may also apply to the method.

Again further parameters may refer to environmental influence, to actuating values or set-values (control) and/or to aims of operating the device, e.g. machine or transport machine, apparatus, producing product.

According to a further embodiment of the method, a first parameter of the sets may be a parameter having numerical values and/or a second parameter of the sets may be a nominal parameter (see definition mentioned above), e.g. a parameter defined by at least one word of a natural language. The nominal parameter may comprise text and/or may have a non-numerical meaning although it may be stored using numerical values for decoding, e.g. ASCII (American Standard Code II) code or another appropriate computer code.

According to a further embodiment, the data base may be used for performing a method that finds the shortest or longest way/route or sequence of operating points through a graph that is represented by the operating points and by transitions between the operating points, preferably considering at least one optimization criterion. The optimization method may be a "greedy" algorithm, e.g. the Dijkstra algorithm, etc.

According to a further embodiment, the database search, the storing of new operating point data and the processing of the data elements may be performed automatically using a data processing device.

According to a further embodiment, the number of potential operating points according to the data elements within the sequence of operating points may be less compared to the number of operating states found for the data elements, preferably by at least 10 percent or at least 50 percent or at least 90 percent of the number of data elements.

According to a further embodiment, the quantization of time maybe adapted depending on the need of the application, preferably by choosing a coarser quantization of time for a second sequence of the data elements compared to a quantization used for a first sequence of the data elements.

According to a next aspect, a method of displaying a sequence of preferred operating points of a device on a display device is provided, comprising:
- storing data describing a graph comprising a plurality of operating points of a device and transitions between these operating points, and/or
- using the stored data for calculating a path through the graph according to at least one optimization criterion, and/or
- displaying the calculated path as a sequence of preferred operating points of a device on a display device to a user, wherein data mentioned above and/or a method mentioned above is used.

The calculated graph may be displayed based on numeric data or based on pixel data or vector data, e.g. within picture data, e.g. data in "jpg", "png", "img" format or any other appropriate format.

According to a further aspect, a data processing device is provided, comprising:
- at least one processor capable to execute instruction of a program, and/or
- a memory storing instructions of the program.

During executing the instructions of the program by the processor:
- a set of computer readable data according to any one of the embodiments mentioned above may be processed by receiving the request data and by generating the answer data according to the request by the user,
- computer readable data (at least two of the transitions start at the same operating point and/or end on the same operating point) according to the embodiment mentioned above may generated, and/or,
a method according as mentioned above may be performed. Thus, the technical effects valid for the methods doe also apply to the data processing device.

The data processing device may comprise:
- a memory that is configured to store the instructions and to store data that is used or generated during the execution of the instructions,
- a data input device, and
- a data output device.

The input device may receive or may be used to input determined values, for instance using a data file or using a keyboard. The output device may send or may be used to output data, for instance on a monitor, e.g. a display, or into an output file. Thus, the features, advantages and technical effects that are valid for the proposed data and/or methods and its embodiments may also be valid for the calculation device.

According to a further embodiment, an electronic readable computer product is provided, comprising instructions of a program stored thereon or stored therein. During executing the instructions of the program by a processor a method according to any one of the claims may be performed or data as mentioned above may be generated.

According to a further embodiment, a product may be protected that is produced in a production process that uses a method as mentioned above or that has an optimized operation based on data as mentioned above.

### Definitions for terms used in this application:

Device: May be any technical machine or apparatus with several operating points. The device may be used e.g. for transportation or for the production of goods. The device may comprise a software-based control that has several states corresponding to operating points of the device. Alternatively, the device may comprise a control unit based on a state machine that does not comprise a processor. The device may comprise a combination of the device types mentioned before.

Examples of a machine are:
- Machine comprising rotating parts,
- Machine used for transportation of persons and/or goods, e.g. cars, truck, plane, ship, etc.

Examples of an apparatus are:
- Apparatus for basic operating of process engineering/technology, e.g. comminution, cooling, drying, mixing, filtration, distillation, evaporation, filtration, transporting materials, oxidation, hydrogenation, polymerization, etc.
- Apparatus for mechanical and/or chemical and/or thermic process engineering,
- Apparatus for coffee roasting, production of beer or production of pre-products for beer, e.g. malt, etc.

Examples of application fields are:
- Semiconductor industry,
- Pharmaceutics industry,
- Car and/or plane manufacturing industry,
- Food production industry,
- Chemical industry, etc.

More specific examples are:
- Vertical evaporator, e.g. dependency of heat transfer coefficient, concentrations and height of filling, preferably in cases of limited detection data or limited measurement of data or an operating on only a few operating points,
- Evaporator, e.g. dependency of heat transfer coefficient, effective difference of temperature and boiling temperature, preferably for non-linear dependencies or strongly non-linear dependencies,
- Coffee roaster, e.g. the correlation between roast time, heat, bean properties, environmental atmosphere, recipe or cupping results and roaster set-points such as the hot air temperature over time, drum speed, roast duration, fan settings or the target bean temperature.
- Mill, e.g. the rotational speed relative to original and target regrind size, moisture, efficiency or energy consumption.
- Crystallizers, e.g. discontinuous relations, e.g. equilibrium state isotherms, of two component systems during crystallization at different temperatures, e.g. of NaCl (sodium chloride) and KCI (potassium chloride).
- Dryers, e.g. impact of sorption and desorption processes on temperatures, fan, rotation or belt speeds, material flows or properties of materials to achieve efficient and stable operating.
- Mixers, e.g. mixing ratio depending on density, size or solubility of mixed materials and temperature or time of mixing of at least two components.

The device may be used for the purpose of creating or modifying physical and/or chemical and /or spatial properties (within the three-dimensional room, or within a two-dimensional room) of matter and/or the conversion of energy. Robots, especially the arms or robots may or may not be controlled using the proposed methods and data structures.

The device may implement a physical and/or physicochemical (unit operation) and/or chemical and/or bio-chemical and/or biological and/or energy conversion process in a continuous or dis-continuous manner.

A device implementing one or more of the following unit operating may be used:
i. Fluid flow processes, including fluids transportation, filtration, and solids fluidization.
ii. Heat transfer processes, including evaporation and heat exchange.
iii. Mass transfer processes, including gas absorption, distillation, extraction, adsorption, and drying.
iv. Thermodynamic processes, including gas liquefaction, and refrigeration.
v. Mechanical processes, including solids transportation, crushing and pulverization, and screening and sieving.
vi. Combination (mixing).
vii. Separation (distillation, crystallization).
viii. Reaction (chemical reaction).
ix. Cell growth process.

The device may convert chemically bound energy into kinetic energy, e.g. as is done by a car, etc.

The mentioned values may refer to a value representing
i. A physical observation regarding the device or its function such as time, temperature, humidity, color, velocity, rotational speed, temperature, length, pressure, flow, concentration, position / degree of a component, mass, weight, density, viscosity, color, humidity, pH, fineness, level, granularity, heights/widths, volume, saturation, solubility, joules, watts, current, force, electric or magnetic field strengths, resistance, capacities, wavelength, tension, heat transfer coefficients, wear, or any derivation of any of these quantities,
ii. Ratings regarding the function or output of the device or its products such as flavor (acidity, sweetness, bitterness, Unami, etc.), descriptors (Good, Bad, Excellent, etc.) comfort, experience levels (Beginner, Intermediate, etc.)
iii. Device control descriptors such as
   PID (Proportional Integral (time Delay)) control parameters, delay settings, positions /degrees of components of the device or its control elements or one or more characters denoting a set of control descriptors (sport, normal, eco mode, etc.).
iv. Counts such as
   occurrence, frequency of observations.

Operating point: May represent:
- A specific point or a cluster on points within the characteristic diagram or within the characteristic curve of a device. The device may be a real device or a computer simulation of a device, and/or
- A state of a control unit or automation unit of a system, e.g. of a device, and/or
- A state of a software, e.g. of the software of a system control unit.

Operating points may be represented by nodes of a directed graph, e.g. the graph may form a model or a simulation of a device.

An operating point may be characterized by one or more evaluation criterion, e.g. the cumulative duration or the average duration in which the device was within the respective operating point, the frequency of occurrence of the respective operating point, the accuracy and/or completeness of the measurement/determination of the respective operating point, goodness of the system quality (stability, productivity, etc.) at the operating point, etc.

Transition: Directed connection from one operating point to another operating point. The direction of the transition may be defined by the chronological sequence of occurrence of the respective operating points. May be characterized by one or more criterion of quality, e.g. statistics of duration of transitions, cost of a transition (manual effort, consumption, stability), frequency of occurrence, etc.

The data base that is generated represents a structure of operating points of a device encoding sequences/series of operating points, where
A) A device may be:
   i. A thing made or adapted
   ii. for a particular purpose
   iii. through the application of natural phenomena (e.g. physical and/or chemical laws) [especially over time]
   iv. where its function
      1. can be directly or indirectly adapted through external influences (input of control parameters or control instructions, input of set-points, input of environmental factors, etc.),
      2. and/or can be observed through measurements of physical properties of the device, especially of the state of the device in operation, and/or occurring phenomena within or due to its function,
      3. where its achievement of its function can directly or indirectly be observed, e.g. function goals, production goal / purpose achievement
B) An operating point may be defined as:
   i. a unique set of one or more specific values,
   ii. each value represents a specific aspect of the device regarding its function and/or purpose and/or influence on its function.
      1. where a value may be a number and/or one or more symbols
   iii. where a set of values
      1. may contain at least one value representing an influence and/or function achievement and/or aspect of the device function
      2. where a set of values may be defined by their:
         a. temporal correlation, and/or
         b. causal correlation with regard to the function of the device, e.g. due to the function, construction or usage of the device and/ or due to the natural phenomena and/or their observation methods.
C) Where a sequence of operating points encodes a causal and/or temporal relationship between 2 or more operating points. Causality may be regarded, for all normal processes i.e. processes with "real-world-practical-macroscopic" physics, as a cause-effect relationship where effect is always after the cause on the temporal axis where the specific points in time may be irrelevant.
D) Wherein at least two or more sequences of operating points may start and/or may end at one and the same common operating point. There may be a bifurcation that represents the overly of two different sequences of operating points. The sequence of operating points may encode the causal and/or temporal reachability of operating points. That is to say, there may be at least one operating point from which at least two other operating points can be reached and/or there may be at least one operating point which is reachable from two other operating points. Alternatively, this may be expressed by saying that there may be a resulting sequence comprising a set of operating points, where there are at least two portions of the resulting sequence of operating points with at least one shared operating point and at least one (1) not shared operating point. The first portion of the resulting sequence of operating points may be calculated based on raw data or pre-processed data of a first sequence (e.g. a first run) of the device and the second portion of the resulting sequence may be calculated based on raw data or pre-processed data of a second sequence (e.g. a second run or a different part of the first run) of the device, i.e. at least one or typical several operating points occurring during operation of the device may have been omitted when "connecting" the first portion and the second portion such that the last operating point of the first portion of the resulting sequence of operating points is the first operating point of the second portion of the resulting sequence of operating points.

Operating System of a computer: An operating system (OS) is system software that manages computer hardware, software resources, and provides common services for computer programs. Operating system software is software designed to provide a platform for other software. The operating system may include the BIOS (Basic Input Output System) and/or an API (Application Programming Interface). Examples of operating systems are Windows (may be a trade mark), IOS (may be a trade mark), Unix (may be a trade mark), etc.

Greedy algorithm: Specific class of algorithm characterized by successive selection of the next state compared to other states by using a decision criterion that results in the highest gain or best result at the moment of decision making, e.g. gradient descent, Dijkstra algorithm, Prim algorithm, Kruskal algorithm, Floyd-Warshall algorithm etc.

Dijkstra algorithm: An algorithm of the class of greedy algorithms invented by Edger W. Dijkstra in 1956. The algorithm finds the shortest path between nodes of a graph that comprises nodes and edges or transitions between the nodes, e.g. a directed graph or an undirected graph.

The foregoing has outlined rather broadly the features and technical advantages of embodiments of the present disclosure. Additional features and advantages of embodiments of the present disclosure will be described hereinafter. These features may be the subject-matter of dependent claims. It should be appreciated by those skilled in the art that the conception and specific embodiments disclosed may be readily utilized as a basis for modifying or designing other structures or processes for realizing concepts which have the same or similar purposes as the concepts specifically discussed herein. It should also be recognized by those skilled in the art that equivalent constructions do not depart from the spirit and scope of the disclosure, such as defined in the appended claims.

For a more complete understanding of the presently disclosed concepts and the advantages thereof, reference is now made to the following description in conjunction with the accompanying drawings. The drawings are not drawn to scale. In the drawings the following is illustrated in:
- Figure 1: a computer system that comprises an input device,
- Figure 2: a car comprising a motor and a gear box,
- Figure 3: a roaster apparatus, for instance for roasting coffee,
- Figure 4: a table comprising detected values of speed of a shaft (rounds per minute) of the motor and speed of the car,
- Figure 5: a table comprising operating point data generated form the values within the table shown in figure 4,
- Figure 6: a flowchart comprising steps performed within an operating point detection unit,
- Figure 7: a table comprising transition data generated form the values within the table shown in figure 4,
- Figure 8: a coordinate system comprising a graph indicating several sequences of operating points and transitions between these operating points, and
- Figure 9: a flowchart comprising steps performed within a transition detection unit.

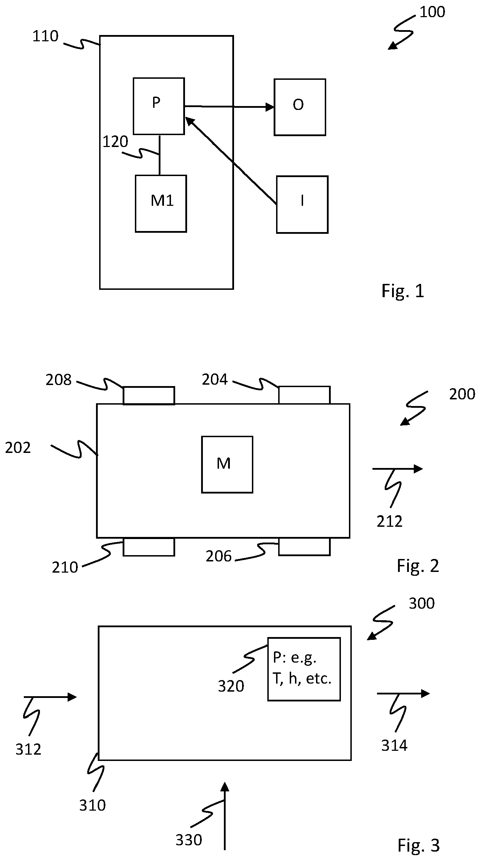

Figure 1 illustrates a computer system 100 that comprises an input device I. Computer system 100 that may perform the method steps which are mentioned in this document. Computer system 100 may comprise:
- A computer device 110,
- An input device I, for instance a keyboard KB or a computer mouse device I. The input device may be configured to input data that will be stored in a memory M1 or that is used to operate an application program, for instance a program that performs optimizations to find preferred operating points of a device, e.g. a machine or an apparatus.
- An optional output device O, e.g. a display device, for instance a touchscreen device that may be configured to output data that is generated during the execution of the application program(s).

Computer device 110 may comprise:
- A processor P,
- A memory M1, and
- An operating system stored within memory M1.

There may be a bus 120 between processor P and memory M1. Further units of computer device 110 are not shown but are known to the person skilled in the art, for instance a power supply unit, an optional internet connection, etc. Alternatively, a server solution may be used that uses calculation power and/or memory space available on the internet supplied by other service providers or on an intranet of a company.

Input device I may comprise:
- a computer mouse, may comprise for instance an electronic and/or electromechanical movement detection unit and at least two switches and/or a mouse wheel or mouse ball within a casing that is adapted to the hand of a user U,
- a touchpad, and/or
- a keyboard KB, comprising for instance more than 100 switches, for instance alphanumerical switches.

Figure 2 illustrates a car comprising a motor/engine M and a gear box (not shown). Car 200 may further comprise:
- A metal frame 202,
- Two front wheels 204, 206,
- Two rear wheels 208, 210, and
- An optional system control unit (not shown).

Further parts of car 200 are known to the person skilled in the art, e.g. steering wheel, brakes, headlights etc.

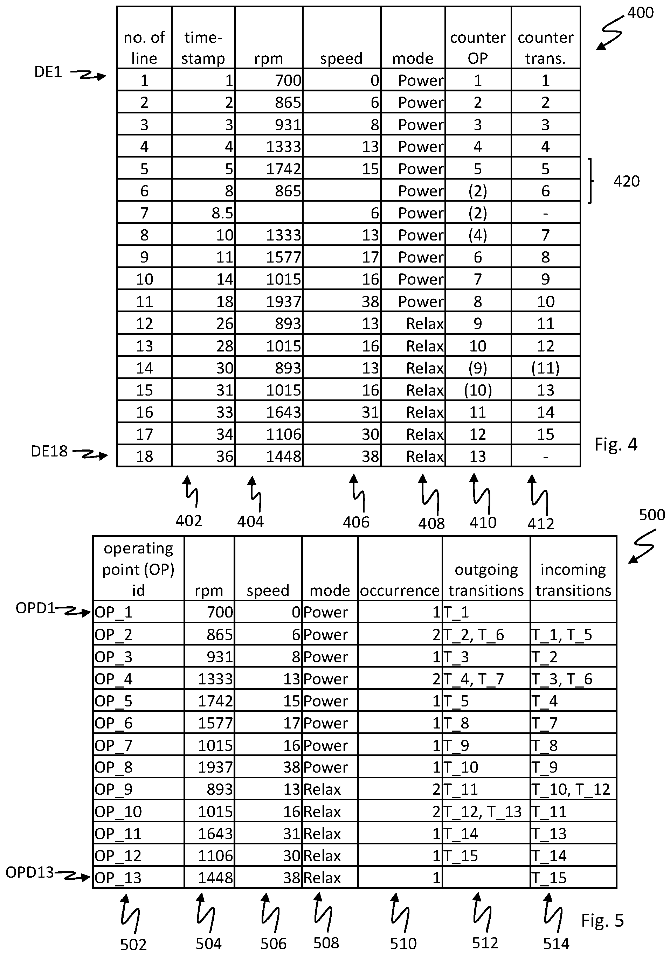

An arrow indicates a forward direction 212. Car 200 may have several operating points during operation. As is illustrated in table 400, which is described in more detail below, several states may be detected during operating of car 200, see description of figure 4 below. Based on the detected states, operating points may be generated, see table 500 which is also described in more detail below, see description of figure 5.

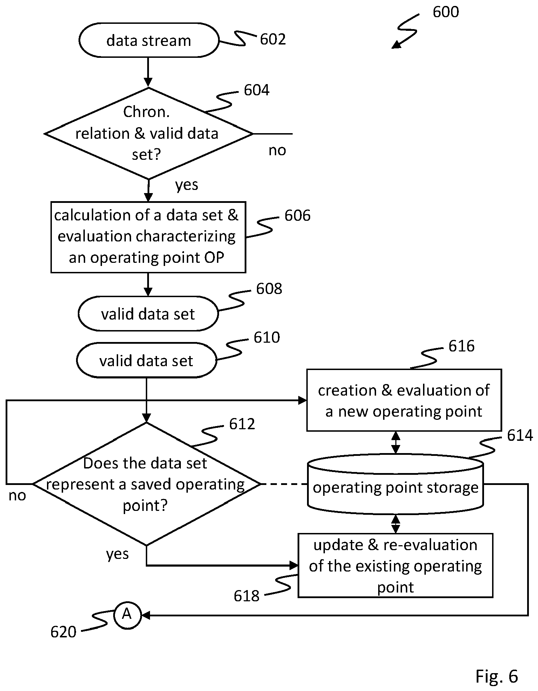

Alternatively, the operating states of a truck, a motorbike, a plane, a ship or any other transport machine may be detected and used for the generation of unique operating points and/or transitions between these operating points. The generation of operating points and/or transitions is described in more detail below, see description of figures 6 to 9. Although, a combustion engine is mentioned in the following, any kind of engine may be used, e.g. an electrical motor.

Figure 3 illustrates a roaster apparatus 300, for instance for roasting coffee. Roasting apparatus 300 may comprise:
- A casing 310,
- An optional data input/output unit 320, and
- An optional system control unit (not shown).

Further parts of roaster apparatus 300 are known to the person skilled in the art, e.g. voltage source, heater, rotating arm(s) for moving the roasted material (e.g. coffee) during roasting, etc.

An arrow indicates unroasted products 312 that are filled into the roaster apparatus 300. A further arrow indicates roasted products 314 that is taken out of roaster apparatus after roasting. Transport belts may be used for transporting the product to and from roasting apparatus 300. Roasting apparatus 300 may have several operating points during its operating.

Parameters P may be used to describe these operating points of apparatus 300 and/or to describe characteristics of the product resulting from specific operating points, e.g.
- Temperature Th of the heater over time,
- Humidity h1 of the product before roasting,
- Humidity h2 of the product after roasting, etc.,
- Mixing rate r of the product indicated by drum rotation speed dr and fan speed fr.
- Color c1 of the product, e.g. before roasting,
- Color c2 of the product after roasting
- Product temperature Tpt at points of time t relative to the start of the roasting
- Temperature T0 before the start of the roasting,
- Product classification Pc roasted in the form of a descriptive tag, e.g. Arabica, washed, type,
- Acidity taste rating TA of the roasted product.

An operator 330 may monitor and/or control operating of roaster apparatus 300. Alternatively, the operating states of any other apparatus may be detected and used for the generation of unique operating points and/or transitions between these operating points, see apparatuses mentioned in the first part of the description, e.g. apparatuses used in chemical industry or in semiconductor industry. The generation of operating points and/or transitions between these operating points is similar to the determination of operating points/transitions for transport machines as is described in more detail below, see description of figures 6 to 9.

Figure 4 illustrates a table 400 comprising detected values of speed (rounds per minute) of a driving shaft of motor M and the speed of car 200 for several points in time. Table 400 comprises columns 402 to 412:
- Column 402 lists the point in time (time stamp), e.g. in seconds or in another time unit,
- Column 404 indicates the speed of the driving shaft of motor M at the respective time,
- Column 406 indicates speed of car 200 at the respective time,
- Optional column 408 indicates a mode of a control system used to control driving, especially to control changing of gears of the gearbox. There may be for instance a "power" mode for a more proactive driving style and a "relax" mode for a more passive driving style,
- Auxiliary column 410 lists values of a counter of the found operating points in order to ease the description of how table 500 is generated, and
- Auxiliary column 412 lists values of a counter of the found transitions in order to ease understanding of how table 500 is generated.

However, all parameters are given for example and may be replaced by other parameters. The parameter "mode" is used to describe how a discrete parameter having only discrete parameter values may be considered for the proposed method. Other discrete parameters may be used as well, for instance experience of an operator, etc.

Table 400 indicates for instance, that at time of 1 second the motor shaft has 700 rpm (rotations per minute) and car 200 has a speed of e.g. 0 km/h. At time of 1 second "power" mode is selected.

As is indicated at time of 8 seconds, there may be gaps of data, e.g. the speed of the shaft was measured with 865 rpm and no speed of car was measured at time of 8 seconds. "Power" mode is still active. At time of 8.5 seconds the value of the speed of the shaft is missing but the value for the speed of car is available, e.g. 6 km/h. Car 200 reaches 38 km/h after 18 seconds for the first time. As is described below in more detail, both lines 6 and 7 of table 400 may be incorporated into the same operating point OP_2, see bracket 420.

As is indicated in column 408, there is a change in mode from "power" to relax after about 18 seconds. The method that is described in the following can deal with this change as is described below. Alternatively, it is of course an option to deal with the reduction of the speed of car 200 and/or with switching of the parameter by using two or more separate runs of operating of car 200, e.g. by starting counting of the time again beginning with 1 second. Methods 600 and 900 as described below can deal with this issue since they may check that the data is in a chronological sequence.

As is indicated in table 400, after 18 seconds the next parameter set sequence describes the speed of car 200 beginning at 13 km/h and finally reaching 38 km/h. Each set of values of speed of shaft, speed of car 200 and mode can be found in table 500, i.e. it corresponds to an operating point. However, table 500 comprises fewer lines than table 400 because some of the lines of table 400 belong to the same operating point OP.

Figure 5 illustrates a table comprising operating point data generated form the values within the table shown in figure 4. Table 500 comprises columns 502 to 514
- Column 502 indicates respective operating points OP_1 to OP_13,
- Column 504 indicates the speed of the driving shaft of motor M at the respective operating point,
- Column 506 indicates the speed of car 200 at the respective operating point,
- Column 508 indicates the mode of the control system used to control driving, e.g. to control a gear box,
- Column 510 comprises the number of occurrences of each operating point,
- Column 512 lists the outgoing transition(s) that start from a respective operating point, and
- Column 514 lists the incoming transition(s) that end in a respective operating point.

### Time stamp 1 second (first line of table 400):

The method starts with the first line 1 containing numbers of table 400. As no operating point has been determined yet (and stored within a data base) in the example, the values of the first line are found to define a first operating point OP_1. Occurrence of this operating point is set to 1 as this is the first occurrence. All three values 700 rpm, speed 0 km/h and mode "power" are recorded for this operating point OP_1

Transition counter (column 410 of table 400) is on start value 1. Therefore, it is recorded that the outgoing transition is T_1. As no transition has been determined yet (and stored within a data base) in the example this may be done without searching in the data base. Transition table 700, e.g. within data base, may be updated with regard to transition T_1. However, updating may be performed only when also the end operating point of transition T_1 is known. Incoming transition of operating point OP_1 may remain empty as this is a start operating point having no incoming transition.

The counter for counting operating points may be incremented.

### Time stamp 2 seconds (second line of table 400):

With regard to the second line of table 400, i.e. time stamp 2 seconds, data base is searched for operating point comprising 865 rpm and speed 6 km/h and modus "power". Nothing is found. Therefore, a new operating point OP_2 is created in line 2 of table 500, e.g. within data base. This is in correspondence with the current value of the operating point counter. The values of rpm, speed and mode are copied. Occurrence is set to 1. The counter for counting operating points may be incremented.

As it is evident that transition T_1 ends in operating point OP_2, i.e. the operating point that follows the previous operating point processed in order to create table 500, transition T_1 is recorded as incoming transition for operating point OP_2. The counter for counting transitions is incremented. According to the current value of the counter for counting transitions, i.e. value 2, a second transition T_2 is created. It is recorded for operating point OP_2 that transition T_2 is an outgoing transition.

Transition table 700, e.g. within data base, may be updated with regard to transition T_1, e.g. "to operating point" OP_2 and optionally delta time or duration of the transition, e.g. 1 second according to table 400 lines 1 and 2. Updating of transition T_2 may also be performed or may be made later when the end operating point of transition T_2 is known.

### Time stamps 3, 4, 5 seconds (lines 3 to 5 of table 400):

With regard to line 3 of table 400, i.e. time stamp 3 seconds, data base is searched for an operating point comprising 931 rpm and speed 8 km/h and modus "power". Nothing is found. Therefore, a new operating point OP_3 is created in line 3 of table 500, e.g. within data base. This is in correspondence with the current value of the operating point counter. The values of rpm, speed and mode are copied from line 3 of table 400 to line 3 of table 500. Occurrence is set to 1. The counter for counting operating points may be incremented.

As it is evident that transition T_2 ends in operating point OP_3, i.e. the operating point that follows the previous operating point processed in order to create table 500, transition T_2 is recorded as incoming transition for operating point OP_3. The counter for counting transitions is incremented. According to the current value of the counter for counting transitions, i.e. value 3, a third transition T_3 is created. It is recorded for operating point OP_3 that transition T_3 is an outgoing transition.

Transition table 700, e.g. within data base, may be updated with regard to transition T_2, e.g. "to operating point" OP_3 and optionally delta time or duration of the transition, e.g. 1 second according to table 400 lines 2 and 3. Updating of transition T_3 may also be performed or may be made when the end operating point of transition T_3 is known.

The same may be repeated for lines 4 and 5 of table 400, i.e. for operating points OP_4 and OP_5 and corresponding transitions T_4 and T_5. Furthermore, the end operating point of transition T_3 is found thereby, i.e. operating point OP_4. The duration and occurrence of transitions T_4 and T_5 are set to 1 and to 1 second respectively. The counter for counting operating points may be incremented twice thereby since the potential operating points are not found in the data base. Furthermore, also the counter for counting transitions may be incremented twice as there are still no "double" transitions between known operating points.

### Time stamps 8 and 8.5 seconds (lines 6 and 7 of table 400):

With regard to line 6 of table 400, i.e. time stamp 8 seconds, data base is searched for an operating point comprising 865 rpm and modus "power". Operating point OP_2 is found. Therefore, no new operating point is created. The values for operating point OP_2 may be updated, i.e. occurrence may be set to 2. The counter for counting operating point is not incremented.

As it is evident that transition T_5 ends in operating point OP_2, i.e. the operating point that follows the previous operating point processed in order to create table 500, transition T_5 is recorded as a further incoming transition for operating point OP_2. In order to ease understanding of the method intermediate steps are omitted here which are performed if occurrence of the operating point is greater than one. In this case, it has to be checked whether a new transition has to be created or whether there is already an outgoing transition to the following operating point. This is explained in more detail below for data of time stamps 30 and 31.

The check mentioned in the previous paragraph is negative for the data of time stamp(s) 8 and 8.5. Thus, the counter for counting transitions is incremented and according to the current value of the counter for counting transitions, i.e. value 6, a sixth transition T_6 is created. It is recorded for operating point OP_2 that transition T_6 is a further outgoing transition.

Transition table 700, e.g. within data base, may be updated with regard to transition T_5, e.g. "to operating point" OP_2 and optionally delta time or duration of the transition, e.g. 8 seconds minus 5 second is equal to 3 seconds according to table 400 lines 5 and 6. Updating of transition T_6 may also be performed or may be made when the end operating point of transition T_6 is known.

With regard to line 7 of table 400, i.e. time stamp 8.5 seconds, data base is searched for an operating point comprising 6 km/h and modus "power". Again, operating point OP_2 is found. Therefore, no new operating point is created. The values for operating point OP_2 may be updated, e.g. the value 6 km/h for speed is added. Occurrence may remain at value 2. The counter for counting operating point is not incremented.

It is checked whether the found operating point OP_2 corresponds to the previous operating point OP_2 within the sequence of operating points according to the values comprised in table 400. As this is the case, no further transition is created. This check may be performed always before deciding whether a new transition is created. Alternatively or additionally, this check may only be performed if there is incomplete data. The valid time stamp may be the first time-stamp of the lines that are mapped to the same operating point, i.e. line 6 for lines 6 and 7, see bracket 420 in figure 4. There may be an "evaluation criteria" which in this example may have three conditions: 1. There is missing data within two subsequent lines, 2. The two lines occur within one second, and 3. Both lines correspond to the same operating point. If the three conditions are met the "evaluation criteria" may state that it is valid to integrate the two lines and the corresponding data into the same operating point data to improve the database (model).

It is also possible to detect first that lines 6 and 7 of table 400 belong to the same operating point, e.g. if processing of line 6 is performed. Thereafter, only one respective update of table 500 and table 700 may be necessary.

### Time stamp 10 seconds (line 8 of table 400):

With regard to line 8 of table 400, i.e. time stamp 10 seconds, data base is searched for operating point comprising 1333 rpm and speed 13 km/h and modus "power". Operating point OP_4 is found. Therefore, no new operating point is created and the counter for counting operating points is not incremented. Occurrence of operating point OP_4 is incremented to 2.

As it is evident that transition T_6 ends in operating point OP_4, i.e. the operating point that follows the previous operating point processed in order to create table 500, transition T_6 is recorded as a further incoming transition for operating point OP_4.

In order to ease understanding of the method intermediate steps are omitted here which are performed if occurrence of the operating point is greater than one. In this case, it has to be checked whether a new transition has to be created or whether there is already an outgoing transition to the following operating point. This is explained in more detail below for data of time stamps 30 and 31.

As the check mentioned in the previous paragraph is negative for data of time stamp 10 seconds, the counter for counting transitions is incremented to the value 7. According to the current value of the counter for counting transitions, i.e. value 7, a transition T_7 (seventh) is created. It is recorded for operating point OP_4 that transition T_7 is a further outgoing transition.

Transition table 700, e.g. within data base, may be updated with regard to transition T_6, e.g. "to operating point" OP_4 and optionally delta time or duration of the transition, e.g. 10 seconds minus 8 seconds equals to 2 seconds according to table 400 lines 6 to 8. Updating of transition T_7 may also be performed or may be made when the end operating point of transition T_7 is known.

### Time stamps 11, 14 and 18 seconds (lines 9 to 11 of table 400):

With regard to line 9 of table 400, i.e. time stamp 11 seconds, data base is searched for operating point comprising 1577 rpm and speed 17 km/h and modus "power". Nothing is found. Therefore, a new operating point OP_6 is created in line 6 of table 500, e.g. within data base. This is in correspondence with the current value of the operating point counter. The values of rpm, speed and mode are copied. Occurrence is set to 1. The counter for counting operating points is incremented.

As it is evident that transition T_7 ends in operating point OP_6, i.e. the operating point that follows the previous operating point processed in order to create table 500, transition T_7 is recorded as incoming transition for operating point OP_6. The counter for counting transitions is incremented. According to the current value of the counter for counting transitions, i.e. value 8, a transition T_8 is created. It is recorded for operating point OP_6 that transition T_8 is an outgoing transition.

Transition table 700, e.g. within data base, may be updated with regard to transition T_7, e.g. "to operating point" OP_4 and optionally delta time or duration of the transition, e.g. 1 second according to table 400 lines 1 and 2. Updating of transition T_8 may also be performed or may be made when the end operating point of transition T_8 is known.

The same is repeated for lines 10 and 11 of table 400 thereby creating operating points OP_7 and OP_8 and transitions T_9 and T_10. Furthermore, the end operating point of transition T_8 is found thereby, i.e. operating point OP_7. The duration of transition T_8 is updated, i.e. to 3 seconds. The duration and occurrence of transitions T_9 and T_10 are set to 1 each and to 4 second and 8 seconds respectively. The counter for counting operating points may be incremented twice thereby since the potential operating points are not found in the data base. Furthermore, also the counter for counting transitions may be incremented twice as there are still no "double" transitions between known operating points.

### Time stamp 26 seconds (line 12 of table 400):

With regard to line 12 of table 400, i.e. time stamp 26 seconds, data base is searched for operating point comprising 893 rpm and speed 13 km/h and modus "relax". Nothing is found. Therefore, a new operating point OP_9 is created in line 2 of table 500, e.g. within data base. This is in correspondence with the current value of the operating point counter. Operating point counter is incremented. The values of rpm, speed and mode are copied. Occurrence is set to 1.

As it is evident that transition T_10 ends in operating point OP_9, i.e. the operating point that follows the previous operating point processed in order to create table 500, transition T_10 is recorded as incoming transition for operating point OP_9. The counter for counting transitions is incremented. According to the current value of the counter for counting transitions, i.e. value 10, a transition T_10 is created. It is recorded for operating point OP_9 that transition T_10 is an outgoing transition.

Transition table 700, e.g. within data base, may be updated with regard to transition T_10, e.g. "to operating point" OP_9 and optionally delta time or duration of the transition, e.g. 8 seconds according to table 400 lines 11 and 12. Updating of transition T_11 may also be performed or may be made when the end operating point of transition T_11 is known.

### Time stamp 28 seconds (line 13 of table 400):

With regard to line 13 of table 400, i.e. time stamp 28 seconds, data base is searched for operating point comprising 1015 rpm and speed 16 km/h and modus "relax". Nothing is found although there is already an operating point OP_7 comprising the same values for rpm and speed but not for mode. Therefore, a new operating point OP_10 is created in line 10 of table 500, e.g. within data base. This is in correspondence with the current value of the operating point counter. The values of rpm, speed and mode are copied. Occurrence is set to 1. The counter for counting operating points is incremented.

As it is evident that transition T_11 ends in operating point OP_10, i.e. the operating point that follows the previous operating point processed in order to create table 500, transition T_11 is recorded as incoming transition for operating point OP_10. The counter for counting transitions is incremented. According to the current value of the counter for counting transitions, i.e. value 12, a transition T_12 is created. It is recorded for operating point OP_10 that transition T_12 is an outgoing transition.

Transition table 700, e.g. within data base, may be updated with regard to transition T_11, e.g. "to operating point" OP_10 and optionally occurrence (set to 1) and delta time or duration of the transition, e.g. 28 seconds minus 26 second equals to 2 seconds according to table 400 lines 1 and 2. Updating of transition T_12 may also be performed or may be made when the end operating point of transition T_12 is known.

### Time stamp 30 seconds (line 14 of table 400):

With regard to line 14 of table 400, i.e. time stamp 30 seconds, data base is searched for operating point comprising 893 rpm and speed 13 km/h and modus "relax". Operating point OP_9 is found and its data is updated. The counter for counting operating points is incremented. The values of rpm, speed and mode are copied. Occurrence is set to 2.

As it is evident that transition T_12 ends in operating point OP_9, i.e. the operating point that follows the previous operating point processed in order to create table 500, transition T_12 is recorded as a further incoming transition for operating point OP_9.

As it is recognized by the method (preferably computer implemented) using the occurrence value of operating point OP_9 that operating point OP_9 occurs repeatedly, i.e. here for the second time, there is the possibility that there is an outgoing transition to the same following operating point as recorded earlier. Thus, this may be checked in advance, i.e. before creating a new transition. The method may perform a look forward step in order to check if there follows a new operating point after operating point OP_9 or an already known operating point. Data in line 15 of table 400 may be used therefore. In the present case, it is determined that operating point OP_10 follows, i.e. an operating point already stored within the database. The method may use therefore table 700 in order to check if there is already a transition outgoing from operating point OP_9 and incoming to operating point OP_10. As this is the case for transition T_11, no new transition is created. The counter for counting transitions is not incremented.

As it is already recorded within table 500, line 9 that transition T_11 is an outgoing transition from operating point OP_9, no further update of table 400, line 9, column 512 may be made. Alternatively, the transition T_11 may be recorded twice as outgoing transition for operating point OP_9.

Furthermore, table 700 may be updated, e.g. occurrence of transition T_11 may be incremented to value 2 and the duration may be updated, e.g. to the mean duration, i.e. the mean of previous value 2 seconds and of current value 1 second equals to 1.5 seconds.

The counter for counting transitions may not be incremented if a transition has been found in table 400.

### Time stamp 31 seconds (line 15 of table 400)

Essentially the same steps as for data of time stamp 26 is performed, i.e. same values for rpm, speed and mode are valid. Operating point OP_10 is found in the database and updated, e.g. occurrence is incremented to value 2. As occurrence is greater 1 a look forward is performed in order to determine the next operating point, i.e. operating point OP_11.

It may be determined that this is a new operating point and that therefore there cannot be a transition to this operating point be stored within the transition database. Alternatively, table 700 may be used for a search for a transition from operating point OP_10 to operating point OP_11. No such transition is found.

Therefore, a new transition T_13 is created and it is recorded that transition T_13 is a further outgoing transition of operating point OP_10, see line 10 in table 500. Both counters, i.e. operating point counter and transition counter are incremented thereby appropriately.

### Time stamps 33, 34 and 36 seconds (lines 16 to 18 of table 400):

With regard to line 16 of table 400, i.e. time stamp 33 seconds, data base is searched for operating point comprising 1643 rpm and speed 31 km/h and modus "relax". Nothing is found. Therefore, a new operating point OP_11 is created in line 11 of table 500, e.g. within data base. This is in correspondence with the current value of the operating point counter. The counter for counting operating points is incremented. The values of rpm, speed and mode are copied. Occurrence is set to 1.

As it is evident that transition T_13 ends in operating point OP_11, i.e. the operating point that follows the previous operating point processed in order to create table 500, transition T_13 is recorded as incoming transition for operating point OP_2. As occurrence of operating point OP_11 is still on the value 1 no check with regard to the next operating point is necessary. The counter for counting transitions is incremented. According to the current value of the counter for counting transitions, i.e. value 14, a transition T_14 is created. It is recorded for operating point OP_11 that transition T_14 is an outgoing transition.

Transition table 700, e.g. within data base, may be updated with regard to transition T_13, e.g. "to operating point" OP_11 and optionally delta time or duration of the transition, e.g. 2 seconds according to table 400 lines 15 and 16. Updating of transition T_14 may also be performed or may be made when the end operating point of transition T_14 is known.

The same is repeated for lines 17 and 18 of table 400, i.e. for operating points OP_12 and OP_13. A further transition T_15 is used. The outgoing transition of operating point OP_13 may remain empty as this is an end operating point having no outgoing transition.

Transition table 700 is also extended accordingly, i.e. for transition T_14 it is recorded that it points to operating point OP_12, has an occurrence of 1 and a duration (corresponding to average duration) of 1 second. For transition T_15 it is recorded within table 700, e.g. within data base, that it points from operating point OP_12 to operating point OP_13. Occurrence of transition T_15 is set to 1 and the duration (average of duration) is set to 2 seconds, i.e. see difference of time stamps 36 and 34.

As is visible from table 500 the time stamps may not be used any more in tables 500 and 700, e.g. within database DB. It is possible to store the time of the duration of transition (equivalently average duration if occurrence of transition is greater than 1) or to store the time stamps optionally for the corresponding operating points. Thus, the proposed method is not dependent on exact time stamps. It may be sufficient if the data, e.g. as indicated in table 400 is within a chronological order, i.e. first generated values coming first and before values that were generated later. However, several runs may be overlaid and data of each ran may be processed separately from data of other runs.

Furthermore, there is a reduction of the amount of data, e.g. speed of shaft values and speed of car 200 values, etc.

Figure 6 illustrates a flowchart comprising steps performed within an operating point detection unit. These steps are mentioned also above within the steps for processing data of time stamps 1 second to 36 seconds. Flowchart 600 starts with step 602. In step 602 a data stream or an element of the data stream is received, e.g. data of one line of table 400, preferably rpm data, speed data and mode data.

After step 602 a step 604 follows in order to check if there is a chronological relation between successive data elements of data stream and/or if the data set is valid, for instance a data element of the data stream. If a chronological sequence is present and/or if the data of the data element or of the whole data stream are valid, a step 606 follows immediately after step 604. If there is an error, an error message or an entry within an error file may be generated and the current data element or the whole data stream may not be processed, e.g. no operating point is created and/or no transitions are created for the current data element.

Another example regarding validity is the following: Data recordings may often miss data elements or may have large chronological gaps. Therefore, another check regarding validity may be whether the timestamp difference between the current and the previous data element is smaller than x in order to ensure that the method does not model false relationships. If the time difference between data elements is too large, they may be simply ignored and a transition may be created only when two valid operating points OP are sequentially detected.

Step 606 relates to the calculation of a data set and evaluation characterizing an operating point OP. The result of step 606 is a valid data set, see step 608. A valid data set may be a data set as represented in each line of table 400. Data of lines 6 and 7, see bracket 420, may be merged into one valid data set.

Performance of a following step 610 may be triggered, i.e. there is a valid data set. This may be used in event triggered programming. Alternatively, there may be only one step "valid data set" or these steps may be omitted using a more sequential programming style.

In a following step 612 it is checked whether the data set represents an operating point that is already saved in the data base. As indicated, an operating point storage 614 may be used thereby, see for instance table 500. If a corresponding operating point is not found in the data base a new operating point is created and evaluated in a following step 616. Operating point storage 614 may be used therefore.

If a corresponding operating point is found in the data base step 618 the existing operating point is updated and re-evaluated in step 620.

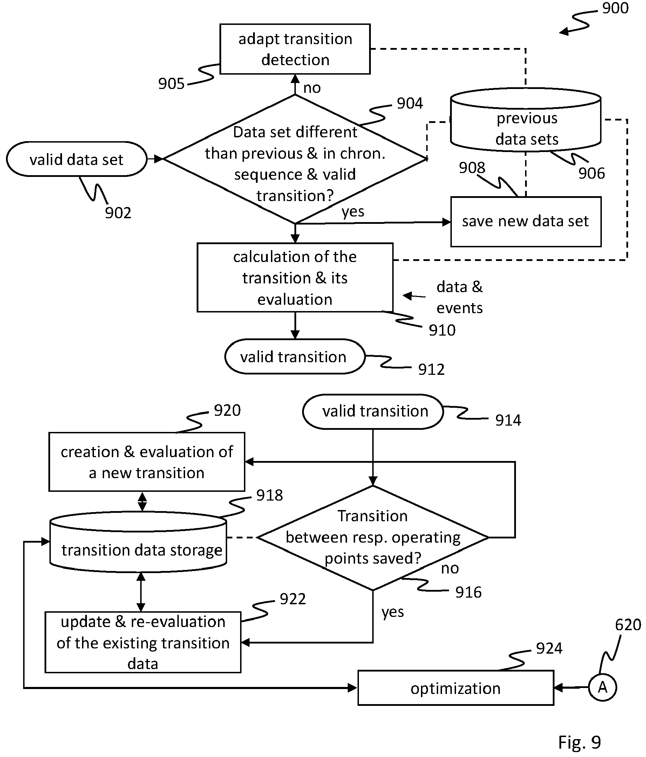

Optionally, the method may then perform an optimization step 924, see figure 9 and points "A" in figure 6 and figure 9.

It is possible to process the data stream only for operating points but not for transitions between the operating points. This may already have technical effect(s), e.g. reduction of possible operating points or operating point data. However, transitions may also be considered as is explained above and as is explained in the following.

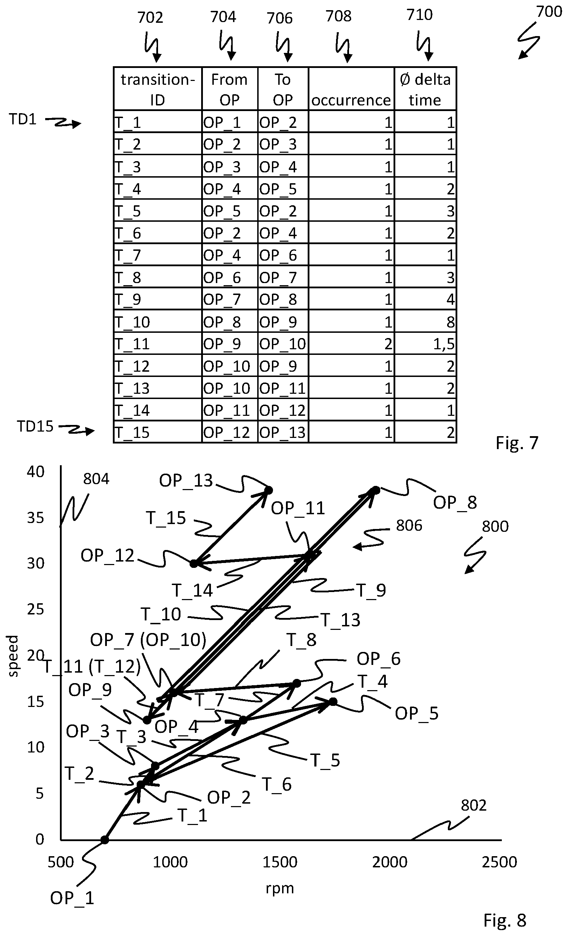

Figure 7 illustrates a table 700 comprising transition data generated form the values within the table 400 shown in figure 4 as already explained in detail above. Table 700 comprises columns 702 to 710
- Column 702 lists the transitions, e.g. using transition identifiers (ID) including the current value of the transition counter mentioned above or other names,
- Column 704 comprises identifiers of operating points OP_1 to OP_12 indicating the operating point from which a corresponding transitions starts, e.g. transition T_1 from operating point OP_1,
- Column 706 comprises identifiers of operating points OP_2 to OP_13 indicating the operating point to which a corresponding transitions leads, e.g. transition T_1 leads to operating point OP_2,
- Column 708 comprises values for the number of occurrences of the respective transition T_1 to T_15 within the processed data stream, see for instance occurrence value 2 for transition T_11 as mentioned above, and
- Column 710 comprises the duration (delta time) of a transition if the transition occurred only once and the average duration if the transition occurred more than once.

Figure 8 illustrates a Cartesian coordinate system 800 comprising a graph 806 indicating several sequences of operating points OP_1 to OP_13 and transitions T_1 to T15 between these operating points OP_1 to OP_13 as mentioned above. Coordinate system 800 comprises a horizontal x-axis 802 and a vertical y-axis 804. X-axis 802 illustrates the rotation speed of the shaft of motor M in rpm (rotations per minute) within a range of about 500 rpm to about 2500 rpm. Y-axis 804 illustrates the speed of car 200 in a range of 0 km/h (kilometer per hour) to about 40 km/h.

As can be seen in Figure 8 there is at least one operating point or there are several operating points for which there is more than one outgoing transition, see for instance operating point(s) OP_2, OP_4 and OP_10. Furthermore, there may be at least one operating point or there are several operating points for which there is more than one incoming transition, see for instance operating point(s) OP_2, OP_4 and OP_9. This may be regarded as an overlay of operating points or as an overlay of sequences of operating points connected by transitions.

Furthermore, there may be at least one transition that is used in at least two sequences of operating points according to the corresponding transitions, see for instance transition T_11. This may also be regarded as an overlay of operating points and/or an overlay of transitions. Thus, graph 806 may be named as an overlay graph 806. Optionally, graph 806 may be displayed on a display unit to a user or to an operator. Furthermore a part of graph 806 may result from an optimization method as is described below in more detail. The graph resulting from optimization may also be displayed on a display unit to a user or to an operator.

A graph that is similar to graph 806 is valid for the operating points and transition between operating points of roaster apparatus 300. In this case, x-axis 802 may refer to the roasting temperature and y-axis 804 may refer to humidity h2 of the roasted product, e.g. of roasted coffee. Again the complete graph or part of this graph may be displayed to a user or operator of the roasting apparatus 300, especially a graph resulting from an optimization method performed on the complete graph or a portion of the complete graph.

Figure 9 illustrates a flowchart comprising steps performed within a transition detection unit. These steps have already been mentioned above during the description of processing of data of the data stream illustrated in table 400. Again, it is possible to use event-based programming or more sequential programming. Flowchart or method 900 starts in step 902 with processing of a valid data set. In step 904, it is checked whether the data set is different than previous data sets and/or if there is a chronological sequence within a sequence of the data sets and/or whether the data within the data set is valid regarding the creation of a transition.

If "no" in step 904, previous operating points OP data base 905 is used to adapt the transition detection depending on the data set evaluated in step 904. For example, depending on the analysis scenario, step 905 may set the current valid data set as a new reference for the next transition validation if the timestamp difference between the current valid data set and its previous valid data set is too large. Alternatively, it may discard the current valid data set without further processing if its timestamp does not indicate proper chronological order or if the data set contents indicate that they cannot be associated with previous data sets to form a transition indicating a valid relationship between the data sets.

If "yes" in step 904, step 908 follows and a new data set is stored indicating a new operating point. Operating points OP data base 906 is used therefore.

A step 910 follows after step 904 in case of "yes" in step 904. Calculation of the transition and its evaluation is performed in step 910 as mentioned above. Further data and events may be considered thereby to standardize the transition for simpler latter comparison with other transitions, calculate additional parameters from related data set data and/or determine quality descriptors.

In simplified example three pressure sensors may be used in safety scenario where at least two sensor readings may have to be identical to indicate a reliable reading. Step 910 may have both the current and the previous data sets available. Thus, there may be the opportunity to assign a quality criteria to the transition indicating how many pressure readings where identical for both the current and the previous data sets. This can later be used, for example, to only use transitions with a total of at least 3 pressure sensors of the previous data set and at least 2 pressure sensors of the following data set indicating an identical pressure reading to ensure safe interpretation and usage of the database which comprises the data model of the device.

A step 912 follows after step 910 indicating that there is a valid transition.

A step 914 may be used in an event triggered embodiment as a start point for a valid data set. Steps 912 and 914 may be one step or may be omitted in a more sequentially programmed embodiment.

In a following step 916, it is checked whether the transition between respective operating points is already saved or already stored within the data base, e.g. a transition data storage 918, see for instance table 700.

If nothing is found a new transition is created in step 920 and evaluation of the new transition may be performed, e.g. setting value for occurrences of the transition and/or for duration of the transition as explained above.

If the transition is found in the data base, a step 922 is used to update and re-evaluate the already existing transition data, e.g. incrementing value for occurrences of the transition and/or calculating an average duration of the transition as explained above.

An optional step 924 may be performed to find optimized sequences of operating points based on the found operating point data and/or transition data. An example for an optimization is described below.

Thus, a set of computer readable data 400, 500 with relation to operating states of a device 200, 300 is disclosed, comprising:
request data 400 which forms a request to a data processing device 100, wherein the request data comprises data elements DE1 to DE18 comprising raw data or pre-processed data representing operating states of the device 200, 300 in a chronological sequence,
wherein the data elements comprise at least one physical parameter of the device 200, 300 or of a physical medium produced by the device 200, 300 and by at least one further parameter,
wherein the at least one physical parameter and the at least one further parameter relate to other aspects than physical time or duration between two events, and
answer data 500 which form the answer of the data processing device 100 to a request of a user based on the request data 400,
wherein the answer data comprises operating point data of operating points OP_1 to OP_13 of the device 200, 300,
wherein the operating points OP_1 to OP_13 are defined by a respective value of the at least one physical parameter of the device 200, 300 or of physical medium e.g.
product produced by the device 200, 300 and by a respective value of the at least one further parameter,
and wherein the answer data defines a composed series of operating points OP_1, OP_2, OP_4 comprising:
   - A first portion of the composed series of operating points OP_1, OP_2 that is based on data elements DE1 to DE11 of a first portion of the chronological series, and
   - A second portion of the composed series of operating points OP_2, OP_4 that is based on data elements DE1 to DE11 of a second portion of the chronological sequence, and
wherein the composed series of operating points OP_1, OP_2 is a recombination of portions of the chronological sequence of operating states.

Furthermore, computer readable data 500, 700 representing operating points OP_1 to OP_13 of a device 200, 300 and transitions T_1 to T_15 between the operating points OP_1 to OP_13 is disclosed:
wherein the transitions T_1 to T_15 indicate that at least two of the transitions T_1 to T_15 start at the same operating point OP_1 to OP_13, and/or
wherein the transitions T_1 to T_15 indicate that at least two of the transitions T_1 o T_15 end at the same operating point OP_1 to OP_13,
wherein the operating points OP_1 to OP_13 are defined by at least one physical parameter of the device or of physical medium e.g. product produced by the device and by at least one further parameter,
wherein the at least one physical parameter and the at least one further parameter relate to other aspects than physical time or duration between two events,
wherein the time aspect of the operation of the device 200, 300 is represented at least partially or completely by the transitions T_1 o T_15.

Moreover, a computer-implemented method 600 for determining operating points OP_1 to OP_13 of a device 200, 300 automatically is disclosed, comprising: generating data elements DE1 to DE18 representative for the operation of the device 200, 300 and comprising a set of values of at least one parameter 404, 406, wherein at least one parameter 404, 406 is a physical parameter of the device 200, 300,
using at least one parameter 404, 406 of the data elements DE1 to DE18 for a search within a database 500, 614 comprising operating point data OPD1 to OPD13 of the device 200, 300,
wherein each operating point data OPD1 to OPD13 comprises a set of values of the at least one parameter 504, 506,
if no operating point data OPD1 to OPD13 has been found in the search storing new operating point data OPD1 to OPD13 in the database 500, 614 using data of the respective data element DE1 to DE18, or
if corresponding operating point data OPD1 to OPD13 has been found in the search using this fact for further processing of the respective data element DE1 to DE18, wherein the method effects that the set of values of the at least one parameter 504, 506 within each operating point data OPD1 to OPD13 is different from the set of values of the at least one parameter 504, 506 of all other operating point data OPD1 to OPD13, and
wherein the number of operating points OP_1 to OP_13 defined by operating point data OPD1 to OPD13 is less than the number of data elements DE1 to DE18 used for the searches.

Spoken with other words, at the core, this invention may reduce the modeling complexity of a device to the level at which the device may be used by using time and the sequence of information over time as denominating factor.

The proposed method(s) may be regarded as unique in at least one or several of the following ways:
- A directed graph of unique operating points (also known as operating states) whose sequential accessibility may be encoded through connections (e.g. transitions) to and from other operating points.
- The operating points may represent the operating states of equipment (apparatus, machines...), their physical, chemical, or procedural processes as well as their control and use.
- Complexity reduction through quantization over time where the quantization may be based on the use, production goals, control, safety and security and/or technical aspects of the given device.
- The created model may not require any extra- or interpolation: Each transition and every working point may have occurred historically at least once. Operating point sequences extracted from the model may be optimized but may not violate system limits or limits provided that the (historical) input data, at the time of the model use, also does not and has not violated any system limits.
- With every saved operating point being unique but its accompanying information being continuously updated with every use, information about the modeled system and its use may be recorded. This information may be used when the model is applied to an optimization task.
- Example to operate a car safely according to the user experience: Inexperienced drivers may operate the engine when driving from 0 to speed Z, e.g. 100 kilo meters per hour, only at operating points which have followed each other at least X times in the exact order, where X is an integer, e.g. greater than 10 or greater than 100. Vehicle testers may also use operating point sequences that have occurred only once since modeling start, e.g. operating the engine at a working point with a speed of 6000. Hence, the optimization model may be set to consider only operating points and/or transition with a minimal occurrence of X for the respective inexperienced driver use cases.
- Different types of information from the technical, control, software, device-environment, operating, or the human interaction domain may be combined and navigated within the model if it can be encoded into a numeric value.
- The resulting combination of unique operating points and transitions may be used by "Greedy-Algorithms" for instance such as the Dijkstra-Algorithm. This may enable a time and resource saving (storage, computational power, ...) application of optimization tasks.
- This modeling method may be applied even for non-continuous and non-one-to-one relationships, especially when not all information may be obtained or measured.
- Example: Rpm (rotations per minute) vs. speed for a car with e.g. an Otto-engine and a gearbox, relative concentrations in sorption processes, etc.
- The model may be continuously expanded without having to recalculate the entire model: Each new data set that expands or updates the operating point and/or the transition database(s) does not affect other entries in the database(s). This enables a resource efficient and more predictable usage when compared to other modeling methods:
- The expansion or adaption of neural networks often require a retraining and retesting of the entire model using the newly acquired data. A new data point may change characteristics and/or the behavior of the entire model in unpredictable ways. Furthermore, number of calculations and/or calculation time for the update of the data may be tremendous for neural networks or other AI methods (artificial intelligence).
- Methods involving interpolation require a recalculation of their respective weights of the selected functions, e.g. possibly affecting the properties of the entire function (e.g. polynomial)
- The resulting model or a sequence of operating points generated based on chosen evaluation criteria may be validated and may be intuitively understandable by humans as they can be represented in sequences of chronological events and/or visualized in graphs and/or by simple indications, e.g. visual and/or acoustical, to the user, e.g. to change a parameter.
- The modeling method may combine sequences of operating points that did not necessarily occur in direct chronological order during former operation of the device.
- The overlaying of several runs of a device is possible by using operating points which are unique ones.
- This modeling method may disassemble continuous and discrete events in single transitions and operating points where each pair of connected (e.g. by transitions) operating points may represent an independent building block for a new origin and target state of an optimization task.

### Application example

The following example of modeling of a car with a petrol engine (e.g. Otto engine) and a gearbox demonstrates how a model of their usage is constructed and subsequently applied. This example shows how the procedure may deal with non-continuous and non-one-to-one relationships between variables characterizing the normal usage, function, and limits of the devices mentioned before.

Example: Illustration of how a model is built from the chronologically occurring operating states in a data stream and how this is used with regard to an optimization target.

Illustrative optimization objective to exemplify the model: At which operating points, simplified consisting of rotations per minute (rpm) of the engine and the vehicle speed, must the petrol engine and gearbox of the vehicle be operated, such that it reaches a target speed of 38 in the shortest possible time?

The measurements shown in Figure 4 may have been processed by pre-processing steps. The measurements may occur in a chronological sequence and may reach the input of the state detection unit and the input of the transition detection unit. Figures 6 and 9 show the processing mechanisms of the modeling process, which may be applied iteratively to the data. Block processing may be used as well, e.g. operating points first and then transitions between these operating points.

The evaluation criteria for the operating state detection unit may be used to evaluate incoming data towards their completeness and associability towards a single time unit, here with the size of e.g. 1 second. Further, the evaluation criteria may be used to check the numerical values for plausibility (rotation speed x: 0 < x < 8000 rpm, velocity y: 0 < y < 280 km/h (kilometers per hour)). The evaluation criteria of the transition detection unit may be used to check whether the timestamp of the current operating point follows the previous one and that the difference between the current and the previous timestamp is below a threshold to ensure consecutiveness.

The evaluation criteria of the model management unit may describe that for each transition the occurrence as well as the average delta time, e.g. in time units of the duration of the transition, have to be recorded and updated whenever the transition is traversed.

Figures 5 and 7 show the content of the unique operating point storage 614 and transition data storage 918 shown in figures 6 and 9 after the processing mechanisms shown in figures 6 and 9 have been applied to the input measurements as shown in figure 4. Figure 8 shows a visualization of the storage content regarding the parameter's "rpm" and "speed".

The model may be accessed through the model management unit for an optimization task, Based on the following optimization criterion and initial state:

| duration | rpm | Speed |
|---|---|---|
| shortest | (any) | 38 |
| Initial state | | |
| | 700 | 0 |

The optimization shall now identify the sequence/series of operating points of "rpm" and "speed" that lead the device to reaching a target speed of 38 as fast as possible based on the average delay time of the transitions. Hence, the mode (e.g. "power" or "relax") is set as irrelevant for this task. The directed graph consisting of operating points and transitions may be traversed using Dijkstra's algorithm to produce the sequence of operating points and transitions shown in the following:

| operating point (OP) id | rpm | speed | Occurrence | |
|---|---|---|---|---|
| OP 1 | 700 | 0 | 1 | |
| OP 2 | 865 | 6 | 2 | |
| OP 4 | 1333 | 13 | 2 | |
| OP 6 | 1577 | 17 | 1 | |
| OP 7 | 1015 | 16 | 2 (mode is ignored) | |
| OP 8 | 1937 | 38 | 1 | |

| transition-ID | From OP | To OP | occurrence | Ø delta time |
|---|---|---|---|---|
| T_1 | OP_1 | OP_2 | 1 | 1 |
| T_6 | OP_2 | OP_4 | 1 | 2 |
| T_7 | OP_4 | OP_6 | 1 | 1 |
| T_8 | OP_6 | OP_7 | 1 | 3 |
| T_9 | OP_7 | OP_8 | 1 | 4 |

This means that the following sequence/series of operating points according to figure 8 has to be used for an optimal operating of the transport machine: OP_1, OP_2, OP_4, OP_6, OP_7 and OP_8. This series of operating points is the "composed series of operating points" mentioned in the claims. Transitions T_1 and T_6 are immediately consecutive to each other in the composed series of operating points but not in the series of operating point that corresponds to the sequence of operating states within request data 400. In other words, operating points OP_3, OP_5 have been omitted. Transitions T_2, T_3, T_4 and T_5 have been also omitted within the composed series of operating points.

This sequence is only one of several sequences/series shown in figure 8, e.g. the sequence/series which fulfills the optimization criterion mentioned above better than other sequences/series.

These results may now be used as a sequence of steps or iterative set-points by a sequence control module, which in turn controls the system, e.g. the transport machine, through the system control. Alternatively, the sequence may be used for manual operating of the transport machine. In this case the driver knows how to operate the gears of the gear unit in order to reach the operating points defined in the optimized sequence.

The following data processing units may be used to implement the method described above and further optional units:
- 1) Optional clock unit,
- 2) Optional pre-processing unit,
- 3) Optional event processing unit,
- 4) Operating state detection unit,
- 5) Optional transition detection unit,
- 6) Optional model management unit, and/or
- 7) Optional optimization unit.

An input data stream and/or events may be used as input(s) for the pre-processing unit and/or for the event processing unit. Furthermore, the clock unit may generate an output time data is used as an input signal for the pre-processing unit and/or for the event processing unit.

The data stream may comprise at least one of the following features:
- The data stream may comprise an amount of continuously and/or partially continuously delivered values, e.g. generated by sensor(s) or describing parameters of specific states of the system. Values related to a coffee roaster, for example, may comprise of: recipe name, bean descriptor, environmental parameters over time (humidity, (wet-bulb) temperatures,...), seconds since roast start, rate of rise, machine descriptors (type, air circulation configuration,...), set-points of the roaster (burner levels over time, rate of drum rotation over time, cooling fan speed over time,...) and/or product or educt descriptors such as singular measurements of bean properties before and after roasting (color, humidity, cupping results,...).
- The data within the data stream may be data in chronological order, e.g. in the chronological order in which the data has been generated. Each data element of the data stream may comprise at least one physical parameter and/or at least one product parameter and/or at least one operational parameter and/or quality descriptors of the other parameters where the specific selection of parameters is dependent on the apparatus or machine modeled. A simple example parameter set for a roaster may comprise: batch number, bean ejection temperature, outside humidity and bean color.
- Gaps or empty data may be tolerated or may be dealt with up to a certain degree. In the application example described above (car), the parameter "mode" was not required for the optimization use case scenario. Hence, if one data element in the data stream misses a value for the "mode" the model management unit may be configured to use the resulting operating point data without "mode" data only for optimization scenarios where "mode" is not required.
- The data stream may be generated in real time from device data, i.e. during operation of the device, or may be generated from stored data of previous runs of the device. Real time may refer to data being generated, processed and made available within the minimal duration possible, e.g. generated within a duration of less than 100 milliseconds (ms) after the occurrence of an event or of less than 50 ms. The duration may depend on the properties of the systems involved in data generation such as sensors, processors, microcontrollers or communication buses.
- The data stream may have a data format appropriate for the units of the system that process the data stream.
- The data of the data stream may be marked by a unique time stamp (clock, watch) or a time stamp comprised in historical data or a sequence count.

The events may comprise at least one of the following features:
- One or more discrete and/or non-continuously generated data, e.g. alarm report, sporadic measurement or detection of a quantity and/or status information.
- The events may be generated in real time, i.e. during operation of the device, or may be generated from stored data of previous runs of the device. The definition of real time is mentioned above. Events may be pieces of information that occur sporadically and one may use their occurrence as information/ "parameters".
- The events may have a data format appropriate for the units of the system that process the data stream.
- The data of the events may be marked by a unique time stamp (clock, time) or a time stamp comprised in historical data or a sequence count.
   1) Optional clock unit: This internal or external unit may generate a specific time data, e.g. comprising hours and/or minutes and/or seconds and/or milliseconds and/or date and/or year. Alternatively, a counter may be used to mark sequential or chronological order. The discretization of time may be adapted depending on the need of the application, e.g. with regard to precision and/or quantization. Memory space needed to store the database may be optimized, e.g. reduced, through choosing the appropriate precision and/or quantization amount.
   2) Optional pre-processing unit:
      Input(s): data stream as mentioned above.
      Output(s): pre-processed data stream.
      Function(s): Adaption of the data stream e.g. in order to: raise the quality of the model and/or reduce complexity and/or validate data and/or calculate intermediate results and/or calculate rates of change and/or buffering of data and/or sum up data or integrate data and/or convert text to number and/or debouncing of input keys and/or generation of events and/or compensation of errors and missing values.
      Example(s): methods for quantization, e.g. of values of parameters or of quantities, quantization of time steps, filtration of noise, soft sensor method, checking plausibility, generating alarms, applying limits, rounding, analog-digital conversions and/or compensation of hysteresis effects.
   3) Optional event processing unit:
      Input(s): events, optionally events pre-processed by pre-processing unit.
      Output(s): pre-processed events.
      Function(s): Information from the system may be made usable for the method of modeling. Events may be converted into the data stream mentioned above. Debouncing, filtering, quantization and compression to essential information may be part of event processing.
      Example(s): Conversion of singular system message "Driving mode switched to "power" by user" to a continuous output of value "power" to each subsequent element of the data stream such that, for example, all data sets record this new "mode" value.
   4) Operating point/state detection unit:
      Input(s): data and/or event data may be used and/or evaluation criteria for describing the model quality of an operating point/state.
      Output(s): Operating point (state) data. Operating point data may also comprise quality data regarding other operating point data or sets of other operating point data, according to set evaluation criterion/criteria. Operating point data may further comprise quality data regarding the feasibility of implementation or use within the model (database) such as, for example, value of errors, etc.
      Function(s):
         - This unit may carry out the method steps 602 to 608 described in figure 6.
         - May check whether all data for a respective operating point may be associated to the same time stamp.
         - If "yes", i.e. all data may be associated to the respective time stamp, the operating point detection unit may generate an operating point represented by operating point data. All or as much as possible of the corresponding detection (measurement) values and further corresponding data relevant for the respective operating point may be included within the operating point data. Additionally, the operating point detection unit may calculate at least one quality quantity of the operating point according to an evaluation criterion or criteria.
         - If "no", i.e. all data may not be associated to the respective time stamp, separation of data to at least two operating points may be necessary. Alternatively, the data may not be used, e.g. it may be simply ignored. Other options are described for method 600.
   5) Optional transition detection unit:
      Input(s): The data stream, e.g. pre-processed, and/or events as well as the operating point data generated by the operating point detection unit.
      Output(s): Transition data as well as optional data indicating the validity of the respective transition for usage within the data model.
      Function(s):
         - 1.) Checks, whether there is a different operating point at the output of the operating point detection unit compared to the directly previously processed operating point at the output of the operating point detection unit.
         - 2.) Checks, whether the time indicated by a time stamp of the different operating point is after the time indicated by the time stamp of the previous operating point.
         - If "yes", i.e. the different operating point was generated later than the previous operating point, a function 3 as mentioned in the following is provided.
         - If "no", i.e. the different operating point was generated earlier than the previous operating point, it is detected that a new sequence of operating points has to be generated and function 3 of the transition detection unit is not used,
         - 3.) A quality quantity for the detected transition may be calculated and stored within the transition data.
   6) Optional model management unit, e.g. data model management unit:
      Input(s): output(s) or output data of the operating point detection unit and output(s) or output data of the transition detection unit and/or evaluation criterion/criteria for processing
      Output(s): Data model comprising operating point data and transition data indicating transitions between operating points indicated by operating point data.
      Function(s):
         - May comprise and manage several operating points and/or transitions between operating points.
         - May store new operating point data and new transition data within the storage used for storing of the data model. Or may store new transition data from an already known operating point within the storage used to store the data model. In a simple version, new operating point data may be stored within the storage without caring about transition(s).
         - If it is detected, that the current operating point and/or the current transition are already included within the data model, the operating point data and/or the transition data may be updated and/or expanded according to the evaluation criterion/criteria used for the data model processing. Expanding may be understood as adding data that was previously not known to the respective operating point, e.g. was not stored within the respective operating point data, or for the respective transition, e.g. not stored within the respective transition data.
         - The data model may be used as an interface for subsequent optimization within the optional optimization unit. Alternatively, the data model may be used to display a graph on a display unit to a user, e.g. a process engineer.
   7) Optional optimization unit:
      The optional optimization may or may not be an essential part of the invention.
      Input(s): Data model, start operating point(s) and/or end operating point(s) and/or optimization criterion/criteria.
      Output(s): A sequence of operating points and/or of transitions between these operating points, wherein the sequence is optimal according to the configuration specified by one or more elements of a start operating point and/or one or more elements of an end operating point and/or optimization criterion/criteria.
      Function(s):
         - The optimization unit may choose one operating point or several operating points according to the input or input data of the optimization unit, e.g. it is also possible to choose a start point and an endpoint, at least two start points or at least two end points, etc.
         - The optimization may unit search for an optimal sequence, i.e. a path, in order to find e.g.:
            - A path or an optimal path between the start operating point and the end operating point,
            - Selects one of the specified end operating points or one of the end operating points valid within the data model based on an optimum path from the start operating point or from one of at least two specified start operating points,
            - Selects one of the start operating points or one of the start operating points valid within the data model based on an optimum path to the end operating point or to one of at least two specified end operating points,
         - Backward search and/or forward search may be applied thereby.
         - The Dijkstra algorithm may be used.

Coming back to the example mentioned above, i.e. the combustion engine (petrol or diesel), the data processing units may be integrated within the process optimization of the control unit of car 200 as follows:
- Sensor units may detect environmental quantities (rain, temperature, etc.), events (detected street signs, weather forecasts, danger ratings etc.) and/or states of car 200, (e.g. rotations per minute of motor M, velocity of car 200, engine (control) settings etc.)
- The sensor units output a data stream and events (slip detection results, grip, codes for engine status, changes in limits, etc.)
- The data stream and the events are used as an input data stream and as input events for the data processing units mentioned above,
- Depending on the desired end operating point and/or on a desired condition (optimization criterion or criteria) a sequence of operating points is determined using the data processing units,
- The data stream, the events and/or the calculated sequence of target operating points may be used as inputs of a sequence control unit,
- Depending on the input(s) the sequence control unit may generate target values (set value) for a system control unit of car 200. The system control unit may comprise an open loop control or a closed loop control unit (realizing feedback loops).
- The system control unit (e.g. of the car) may generate control output(s),
- The control output(s) may be used to control the engine or motor M of car 200 and/or the gear box of car 200. Thus, the system state of the car may be adapted according to the outputs of the car control unit.

Although embodiments of the present disclosure and their advantages have been described in detail, it should be understood that various changes, substitutions and alterations can be made therein without departing from the spirit and scope of the disclosure as defined by the appended claims. For example, it will be readily understood by those skilled in the art that many of the features, functions, processes and methods described herein may be varied while remaining within the scope of the present disclosure. Sequential program code may be used and/or object-oriented program code may be used and/or other programming paradigms. Thus, state machines may be used that are realized using at least one processor or that are realized using electrical circuitry without a processor.

Moreover, the scope of the present application is not intended to be limited to the particular embodiments of the system, process, manufacture, method or steps described in the present disclosure. As one of ordinary skill in the art will readily appreciate from the disclosure of the present disclosure, systems, processes, manufacture, methods or steps presently existing or to be developed later that perform substantially the same function or achieve substantially the same result as the corresponding embodiments described herein may be utilized according to the present disclosure. Accordingly, the appended claims are intended to include within their scope such systems, processes, methods or steps. The embodiments mentioned in the first part of the description may be combined with each other. The embodiments of the description of figures may also be combined with each other. Further, it is possible to combine embodiments mentioned in the first part of the description with examples of the second part of the description which relates to figures 1 to 9.

## Claims

1. Set of computer readable data (400, 500) with relation to operating states of a device (200, 300), comprising:
- request data (400) which forms a request to a data processing device (100), wherein the request data comprises data elements (DE1 to DE18) comprising raw data or pre-processed data representing operating states of the device (200, 300) in a chronological sequence, wherein the data elements comprise at least one physical parameter of the device (200, 300) or of a physical medium produced by the device (200, 300) and by at least one further parameter,
wherein the at least one physical parameter and the at least one further parameter relate to other aspects than physical time or duration between two events, and
- answer data (500) which form the answer of the data processing device (100) to a request of a user based on the request data (400),
wherein the answer data comprises operating point data of operating points (OP_1 to OP_13) of the device (200, 300),
wherein the operating points (OP_1 to OP_13) are defined by a respective value of the at least one physical parameter of the device (200, 300) or of physical medium (e.g. product) produced by the device (200, 300) and by a respective value of the at least one further parameter,
and wherein the answer data defines a composed series of operating points (OP_1, OP_2, OP_4) comprising:
- a first portion of the composed series of operating points (OP_1, OP_2) that is based on data elements (DE1 to DE11) of a first portion of the chronological series, and
- a second portion of the composed series of operating points (OP_2, OP_4) that is based on data elements (DE1 to DE11) of a second portion of the chronological sequence, and
wherein the composed series of operating points (OP_1, OP_2) is a recombination of portions of the chronological sequence of operating states.

2. Set of computer readable data (400, 500) according to claim 1, wherein the answer data comprises transition data of transitions (T_1 to T_15) between the operating points (OP_1 to OP_13), and
wherein the time aspect of the operation of the device (200, 300) is represented (at least partially or completely) by the transitions (T_1 o T_15), and wherein the composed series of operating points (OP_1, OP_2, OP_4) comprises at least one common operating point (OP_2),
wherein a first transition (T_1) ends on the common operating point (OP_2),
wherein a second transition (T_6) starts on the common operating point (OP_2), and wherein the first transition (T_1) is not immediately before the second transition (T_6) in a series of operating points corresponding to the sequence of operating states of the chronological sequence within the request data (400).

3. Set of computer readable data (400, 500, 700) according to claim 2,
wherein the transitions (T_1 to T_15) indicate that at least two of the transitions (T_1 to T_15) start at the same operating point (OP_1 to OP_13), and/or
wherein the transitions (T_1 to T_15) indicate that at least two of the transitions (T_1 o T_15) end at the same operating point (OP_1 to OP_13).

4. Set of computer readable data (400, 500) according to any one of the preceding claims, wherein the answer data (500) comprises:
at least two sets of operating point data (OPD1 to OPD13) or at least three sets of operating point data (OPD1 to OPD13) comprising values of at least one physical parameter and of the at least one further parameter,
wherein each set represents a unique operating point (OP_1 to OP_13) of the device (200, 300), and
wherein each set of operating point data (OPD1 to OPD13) comprises at least one identifier (512, 514) for a transition (T_1 to T_15) between two successive operating points (OP_1 to OP_13),
for at least one of an outgoing transition (T_1 to T_15) from the operating point (OP_1 to OP_13) specified by the respective operating point data (OPD1 to OPD13) and(/or) an ingoing transition (T_1 to T_15) to the operating point (OP_1 to OP_13) specified by the respective operating point data (OPD1 to OPD13).

5. Set of computer readable data (400, 500) according to claim 4, wherein the answer data (500) comprises within each set of operating point data (OPD1 to OPD13) occurrence data (510) indicating the number of occurrences of the respective operating point (OP_1 to OP_13) to which the set belongs within at least one operating sequence of operating points (OP_1 to OP_13) of the device (200, 300).

6. Set of computer readable data (400, 500, 700) according to any one of the preceding claims, comprising within the answer data (500, 700):
at least two sets of transition data (TD1 to TD15),
wherein each set of transition data (TD1 to TD15) indicates a transition (T_1 to T_15) from one operating point (OP_1 to OP_13) to a subsequent operating point (OP_1 to OP_13) of the device (200, 300),
wherein (preferably) each transition data (TD1 to TD15) comprises a first data element indicating an operating point (OP_1 to OP_13) on which the transition (T_1 to T_15) starts (T_1 to T_15) and a second data element indication an operating point on which the transition (T_1 to T_15) ends.

7. Set of computer readable data (400, 500, 700) according to any one of the preceding claims,
wherein the at least one physical parameter is a physical parameter of the device (200, 300), and
wherein the at least one physical parameter is one of the following physical quantities: velocity, rotational speed, temperature, length, pressure, flow, concentration, position or angular position of a component, mass, weight, density, viscosity, color, humidity, pH value, level, fineness, granularity, heights/widths, volume, saturation, solubility, physical energy (joules), physical work or physical power (watts), current, voltage, force, electric or magnetic field strengths, resistance, capacities, vibration, wavelength, tension or any derivation of any of these quantities.

8. Set of computer readable data (400, 500, 700) according to any one of the preceding claims, wherein the physical parameter (504, 506) is a parameter having numerical values and wherein at least one of the further parameter (508) is a nominal parameter, preferably a parameter defined by at least one word of a natural language.

9. Set of computer readable data (400, 500, 700) according to any one of the preceding claims, wherein the data is generated according to a computer-implemented method (600) for determining operating points (OP_1 to OP_13) of a device (200, 300) automatically, comprising:
generating data elements (DE1 to DE18) representative for the operation of the device (200, 300) and comprising a set of values of at least one parameter (404, 406),
wherein at least one parameter (404, 406) is a physical parameter of the device (200, 300),
using at least one parameter of the data elements (DE1 to DE18) or all parameters of the set for a search within a database (500, 614) comprising operating point data (OPD1 to OPD13) of the device (200, 300),
wherein each operating point data (OPD1 to OPD13) comprises a set of values of the at least one parameter,
if no operating point data (OPD1 to OPD13) has been found in the search storing new operating point data (OPD1 to OPD13) in the database (500, 614) using data of the respective data element (DE1 to DE18), or
if corresponding operating point data (OPD1 to OPD13) has been found in the search using this fact for further processing of the respective data element (DE1 to DE18),
wherein the method effects that the set of values of the at least one parameter within each operating point data (OPD1 to OPD13) is different from the set of values of the at least one parameter of all other operating point data (OPD1 to OPD13), and
wherein the number of operating points (OP_1 to OP_13) defined by operating point data (OPD1 to OPD13) is less than the number of data elements (DE1 to DE18) used for the searches.

10. Computer readable data (500, 700) representing operating points (OP_1 to OP_13) of a device (200, 300) and transitions (T_1 to T_15) between the operating points (OP_1 to OP_13),
wherein the transitions (T_1 to T_15) indicate that at least two of the transitions (T_1 to T_15) start at the same operating point (OP_1 to OP_13), and/or
wherein the transitions (T_1 to T_15) indicate that at least two of the transitions (T_1 o T_15) end at the same operating point (OP_1 to OP_13),
wherein the operating points (OP_1 to OP_13) are defined by at least one physical parameter of the device or of physical medium produced by the device and by at least one further parameter,
wherein the at least one physical parameter and the at least one further parameter relate to other aspects than physical time or duration between two events,
wherein the time aspect of the operation of the device (200, 300) is represented at least partially or completely by the transitions (T_1 o T_15).

11. Computer-implemented method (600) for determining operating points (OP_1 to OP_13) of a device (200, 300) automatically, comprising:
generating data elements (DE1 to DE18) representative for the operation of the device (200, 300) and comprising a set of values of at least one parameter (404, 406),
wherein at least one parameter (404, 406) is a physical parameter of the device (200, 300),
using at least one parameter (404, 406) of the data elements (DE1 to DE18) for a search within a database (500, 614) comprising operating point data (OPD1 to OPD13) of the device (200, 300),
wherein each operating point data (OPD1 to OPD13) comprises a set of values of the at least one parameter (504, 506),
if no operating point data (OPD1 to OPD13) has been found in the search storing new operating point data (OPD1 to OPD13) in the database (500, 614) using data of the respective data element (DE1 to DE18), or
if corresponding operating point data (OPD1 to OPD13) has been found in the search using this fact for further processing of the respective data element (DE1 to DE18),
wherein the method effects that the set of values of the at least one parameter (504, 506) within each operating point data (OPD1 to OPD13) is different from the set of values of the at least one parameter (504, 506) of all other operating point data (OPD1 to OPD13), and
wherein the number of operating points (OP_1 to OP_13) defined by operating point data (OPD1 to OPD13) is less than the number of data elements (DE1 to DE18) used for the searches.

12. Method (600) according to claim 11, comprising updating the operating point data (OPD1 to OPD13) found by increasing a frequency counter (510) for the found operating point data (OPD1 to OPD13) if corresponding operating point data has been found in the search.

13. Method (600) according to any one of the claims 11 to 12, wherein the same operating point data is found for at least two queries made for data elements.

14. Method (600) according to any one of the claims 11 to 13, wherein the data elements (DE1 to DE18) form a sequence of data elements (DE1 to DE18),
wherein the order of data element (DE1 to DE18) within the sequence corresponds to the order in which the data elements (DE1 to DE18) where generated by the device (200, 300) or by a simulation unit simulating the device (200, 300) or wherein each data element (DE1 to DE18) comprises a timestamp (402) that indicates the position within the sequence,
wherein at least two transition data elements (TD1 to TD15) are generated describing a time relation between two successive operating points (OP_1 to OP_13),
wherein the transition data elements (TD1 to TD15) are stored within the database or within a transition database (700, 918).

15. Method (600, 900) according to claim 14, wherein the transition data indicate that at least two of the transitions start at the same operating point, and/or
wherein the transition data indicate that at least two of the transitions end at the same operating point.

16. Method of displaying a sequence of preferred operating points (OP_1 to OP_13) of a device (200, 300) on a display device, comprising:
storing data describing a graph (908) comprising a plurality of operating points (OP_1 to OP_13) of a device (200, 300) and transitions between these operating points (OP_1 to OP_13),
using the stored data for calculating a path through the graph (908) according to at least one optimization criterion, and
displaying the calculated path as a sequence of preferred operating points (OP_1 to OP_13) of a device on a display device to a user, wherein data (500, 700) according to one of the claims 1 to 10 and/or a method (600, 900) according to one of the claims 11 to 15 is used.

17. Data processing device (100), comprising:
at least one processor (P) capable to execute instruction of a program, and
a memory (M1) storing instructions of the program,
wherein during executing the instructions of the program by the processor (P):
- a set of computer readable data (400, 500) according to any one of the claims 1 to 9 is processed by receiving the request data (400) and by generating the answer data (500) according to the request by the user,
- computer readable data (500, 700) according to claim 10 is generated, and/or,
- a method (600, 900) according to any one of the claims 11 to 16 is performed,
wherein the data processing device (100) comprises:
- a memory that is configured to store the instructions and to store data that is used or generated during the execution of the instructions,
- a data input device, and
- a data output device.
